# EUROPEAN PATENT APPLICATION

(11) **EP 4 362 371 A1**
(43) Date of publication of application: **01.05.2024**
(21) Application number: 22827707.5
(22) Date of filing: 24.06.2022
(51) Int. Cl.: H04L 5/00

(54) **METHOD FOR TRANSMITTING REFERENCE SIGNAL AND DEVICE**

(30) Priority: 25.06.2021 CN 202110713239
(71) Applicant: Vivo Mobile Communication Co., Ltd., Dongguan, Guangdong 523863 (CN)
(72) Inventor: PU, Wenjuan, Dongguan, Guangdong 523863 (CN); JI, Zichao, Dongguan, Guangdong 523863 (CN); SUN, Peng, Dongguan, Guangdong 523863 (CN); YANG, Xiaodong, Dongguan, Guangdong 523863 (CN); SONG, Yang, Dongguan, Guangdong 523863 (CN)
(74) Representative: Murgitroyd & Company
(86) International application number: PCT/CN2022/101306
(87) International publication number: WO 2022/268215

(57) **Abstract**

Embodiments of this application disclose a method and a device for transmitting a reference signal, and pertain to the field of communications technologies. The method for transmitting a reference signal in the embodiments of this application includes: receiving, by a terminal, first indication information; and determining at least one of the following according to the first indication information: activating or deactivating at least one target reference signal resource; and activating or deactivating at least one target TCI state, where the target TCI state is related to the target reference signal resource, and the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

## Description

### CROSS-REFERENCE TO RELATED APPLICATIONS

The present invention claims priority to Chinese Patent Application No. 202110713239.3, filed with the China National Intellectual Property Administration on June 25, 2021 and entitled "METHOD AND DEVICE FOR TRANSMITTING REFERENCE SIGNAL", which is incorporated herein by reference in its entirety.

### TECHNICAL FIELD

This application pertains to the field of communications technologies, and specifically relates to a method and a device for transmitting a reference signal.

### BACKGROUND

When receiving a secondary cell (Secondary Cell, SCell) activation command, in an activation process of the SCell, a terminal generally needs to perform automatic gain control and time-frequency synchronization on a downlink channel of the SCell according to a tracking reference signal sent by a network side device. The tracking reference signal is sent periodically by the network side device. This causes a large SCell activation delay or excessively large signaling overheads. For example, if a period of the tracking reference signal is too long, the terminal is prone to miss the tracking reference signal when receiving the SCell activation command. Therefore, a next tracking reference signal period needs to be waited for, which causes a large activation delay of the SCell. For another example, if a sending period of the tracking reference signal is shortened, relatively large signaling overheads are caused.

To this end, a new reference signal resource is being discussed in the related art to resolve the foregoing problem, for example, using a temporary reference signal resource to perform automatic gain control, time-frequency synchronization, and the like in an SCell activation process to accelerate activation of the SCell. However, in the case of introducing a new reference signal resource, how to transmit the reference signal resource is still a technical problem to be resolved.

### SUMMARY

Embodiments of this application provide a method and a device for transmitting a reference signal, which can resolve a problem of how to transmit a reference signal resource.

According to a first aspect, a method for transmitting a reference signal is provided, including: receiving, by a terminal, first indication information; and determining at least one of the following according to the first indication information: activating or deactivating at least one target reference signal resource; and activating or deactivating at least one target TCI state, where the target TCI state is related to the target reference signal resource, and the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

According to a second aspect, a method for transmitting a reference signal is provided, including: sending, by a network side device, first indication information, where the first indication information is used by a terminal to determine at least one of the following: activating or deactivating at least one target reference signal resource; and activating or deactivating at least one target TCI state, where the target TCI state is related to the target reference signal resource, and the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

According to a third aspect, an apparatus for transmitting a reference signal is provided, including: a receiving module, configured to receive first indication information; and a determining module, configured to determine at least one of the following according to the first indication information: activating or deactivating at least one target reference signal resource; and activating or deactivating at least one target TCI state, where the target TCI state is related to the target reference signal resource, and the target reference signal resource is used in at least one of the following processes of the at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

According to a fourth aspect, an apparatus for transmitting a reference signal is provided, including: a sending module, configured to send first indication information, where the first indication information is used by a terminal to determine at least one of the following: activating or deactivating at least one target reference signal resource; and activating or deactivating at least one target TCI state, where the target TCI state is related to the target reference signal resource, and the target reference signal resource is used in at least one of the following processes of the at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

According to a fifth aspect, a terminal is provided. The terminal includes a processor, a memory, and a program or an instruction that is stored in the memory and executable on the processor. When the program or the instruction is executed by the processor, the method in the first aspect is implemented.

According to a sixth aspect, a terminal is provided, including a processor and a communications interface. The processor is configured to determine at least one of the following according to first indication information: activating or deactivating at least one target reference signal resource; and activating or deactivating at least one target TCI state, where the target TCI state is related to the target reference signal resource, and the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching. The communications interface is configured to receive the first indication information.

According to a seventh aspect, a network side device is provided. The network side device includes a processor, a memory, and a program or an instruction that is stored in the memory and executable on the processor. When the program or the instruction is executed by the processor, the method in the second aspect is implemented.

According to an eighth aspect, a network side device is provided, including a processor and a communications interface. The communications interface is configured to send first indication information, where the first indication information is used by a terminal to determine at least one of the following: activating or deactivating at least one target reference signal resource; and activating or deactivating at least one target TCI state, where the target TCI state is related to the target reference signal resource, and the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

According to a ninth aspect, a readable storage medium is provided. The readable storage medium stores a program or an instruction, and when the program or the instruction is executed by a processor, the method in the first aspect or the method in the second aspect is implemented.

According to a tenth aspect, a chip is provided. The chip includes a processor and a communications interface, the communications interface is coupled to the processor, and the processor is configured to run a program or an instruction to implement the method in the first aspect or the method in the second aspect.

According to an eleventh aspect, a computer program/program product is provided. The computer program/program product is stored in a non-transitory storage medium, and the program/program product is executed by at least one processor to implement the method in the first aspect or the method in the second aspect.

In the embodiments of this application, a terminal determines at least one of the following according to received first indication information: activating or deactivating at least one target reference signal resource; and activating or deactivating at least one target TCI state related to the target reference signal resource, where the target reference signal resource may be used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching. The embodiments of this application help implement transmission/cancellation of transmission of the target reference signal resource, accelerate activation of the target serving cell, and improve the transmission efficiency or stability of the target serving cell.

### BRIEF DESCRIPTION OF DRAWINGS

FIG. 1 is a schematic diagram of a wireless communications system according to an embodiment of this application;
FIG. 2 is a schematic flowchart of a method for transmitting a reference signal according to an embodiment of this application;
FIG. 3 is a schematic diagram of a format of MAC CE signaling according to an embodiment of this application;
FIG. 4 is a schematic diagram of a format of MAC CE signaling according to an embodiment of this application;
FIG. 5 is a schematic diagram of a format of MAC CE signaling according to an embodiment of this application;
FIG. 6 is a schematic diagram of a format of MAC CE signaling according to an embodiment of this application;
FIG. 7 is a schematic diagram of a format of MAC CE signaling according to an embodiment of this application;
FIG. 8 is a schematic diagram of a format of MAC CE signaling according to an embodiment of this application;
FIG. 9 is a schematic diagram of a format of MAC CE signaling according to an embodiment of this application;
FIG. 10 is a schematic diagram of a format of MAC CE signaling according to an embodiment of this application;
FIG. 11 is a schematic diagram of a format of MAC CE signaling according to an embodiment of this application;
FIG. 12 is a schematic diagram of a format of MAC CE signaling according to an embodiment of this application;
FIG. 13 is a schematic flowchart of a method for transmitting a reference signal according to an embodiment of this application;
FIG. 14 is a schematic diagram of a structure of an apparatus for transmitting a reference signal according to an embodiment of this application;
FIG. 15 is a schematic diagram of a structure of an apparatus for transmitting a reference signal according to an embodiment of this application;
FIG. 16 is a schematic diagram of a structure of a communications device according to an embodiment of this application;
FIG. 17 is a schematic diagram of a structure of a terminal according to an embodiment of this application; and
FIG. 18 is a schematic diagram of a structure of a network side device according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A new radio (New Radio, NR) system is described in the following description for illustrative purposes, and the NR terminology is used in most of the following description, although these technologies can also be applied to applications other than the NR system application, such as the 6^{th} generation (6^{th} Generation, 6G) communications system.

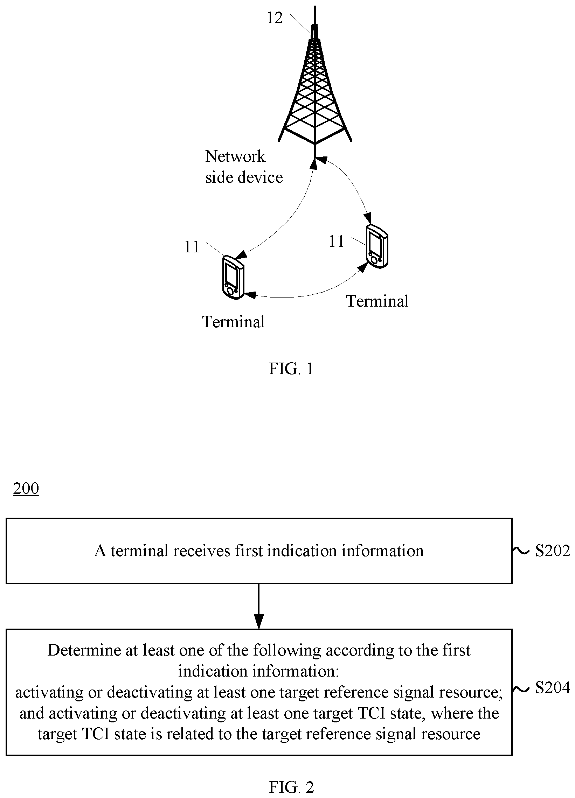

FIG. 1 is a schematic diagram of a wireless communications system to which an embodiment of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a smart watch, a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a next-generation NodeB (gNB), a home evolved NodeB, a WLAN access point, a Wi-Fi node, a transmitting receiving point (Transmitting Receiving Point, TRP), or another appropriate term in the art. Provided that a same technical effect is achieved, the base station is not limited to a specified technical term. It should be noted that, in the embodiments of this application, only a base station in an NR system is used as an example, but a specific type of the base station is not limited.

In conjunction with the accompanying drawings, a method and a device for transmitting a reference signal provided in the embodiments of this application are described below in detail by using some embodiments and application scenarios thereof.

As shown in FIG. 2, an embodiment of this application provides a method 200 for transmitting a reference signal. The method can be performed by a terminal; in other words, the method can be performed by software or hardware installed in the terminal. The method includes the following S202 and S204.

S202: A terminal receives first indication information.

In this embodiment, the first indication information may be carried in at least one of the following signaling: Radio Resource Control (Radio Resource Control, RRC) signaling, Media Access Control-control element (Media Access Control-Control Element, MAC CE) signaling, downlink control information (Downlink Control Information, DCI) signaling, and the like.

The first indication information may be used to activate or deactivate a target reference signal resource (or referred to as triggering or not triggering receiving of a target reference signal), and/or used to activate or deactivate a transmission configuration indicator (Transmission Configuration Indicator, TCI) state related to the target reference signal resource.

In an implementation, the first indication information may explicitly indicate that receiving of the target reference signal (resource) is triggered or not triggered; or when the terminal receives the first indication information, it indicates that receiving of the target reference signal is triggered, and when the first indication information is not received, receiving of the target reference signal is not triggered.

Certainly, the first indication information may also be used for another purpose, for example, activating a target serving cell. In an example, the first indication information may alternatively be target serving cell activation signaling. The target serving cell activation signaling may be used to activate the target serving cell, and is further used to activate a target reference signal resource transmitted on the target serving cell, and a target TCI state related to the target reference signal resource.

The target reference signal resource mentioned in each embodiment of this application is related to a target TCI state. Specifically, the terminal may receive or send the target reference signal resource by using space-related information indicated by the target TCI state. For example, the terminal determines, by using the space-related information indicated by the target TCI state, a beam used to receive the target reference signal resource.

The foregoing target reference signal resource may include at least one reference signal, or may include at least one reference signal in at least one reference signal set.

S204: Determine at least one of the following according to the first indication information: activating or deactivating at least one target reference signal resource; and activating or deactivating at least one target TCI state, where the target TCI state is related to the target reference signal resource.

The target reference signal resource is used in at least one of the following processes of at least one target serving cell: activation of the target serving cell, activation of at least one first TCI state, obtaining of channel state information (Channel State Information, CSI), obtaining of uplink channel information, CSI measurement, beam measurement, beam failure detection, radio link monitor (Radio Link Monitor, RLM) measurement, radio resource management (Radio Resource Management, RRM) measurement, cell search, time-frequency tracking, obtaining of timing, automatic gain control (Automatic Gain Control, AGC), and rate matching.

The target reference signal resource mentioned in the embodiments of this application may be a temporary reference signal (Temporary Reference Signal, TRS), or may be a reference signal used for fast secondary cell activation (RS for fast SCell activation).

In addition, the target reference signal may be a type of reference signal, such as a reference signal used for time-frequency synchronization, a channel state information reference signal (Channel State Information Reference Signal, CSI-RS) used for beam measurement, a CSI-RS used for obtaining channel state information, or a reference signal (Reference Signal, RS) or a synchronization signal/physical broadcast channel signal block/synchronization signal and PBCH block (Synchronization Signal and PBCH block, SSB), a periodic RS, and an aperiodic RS, or may be another RS. The target reference signal may alternatively be a combination of multiple types of reference signals. For example, the target reference signal is a combination of a CSI-RS, an SSB, and a TRS. In this way, target serving cell search + target serving cell activation may be implemented in one step by using the target reference signal. For another example, the target reference signal is a combination of a TRS and a sounding reference signal (Sounding Reference Signal, SRS). In this way, uplink transmission and downlink transmission may be activated at the same time by using the target reference signal.

The first TCI state may include a TCI state of a physical downlink control channel (Physical Downlink Control Channel, PDCCH), a TCI state of a physical downlink shared channel (Physical Downlink Shared Channel, PDSCH), and a TCI state of a semi-static CSI-RS resource set (or Quasi-Co-Location (Quasi-Co-Location, QCL) information). When a network side sends a command for activating the first TCI state, a reference signal (such as an SSB) may need to be received in a process of activating the first TCI state. The network side configuring and activating the target reference signal helps accelerate an activation process of the first TCI state.

In this step, the terminal determines at least one of the following according to the first indication information: activating or deactivating the target reference signal resource; and activating or deactivating the target TCI state. In a case that it is determined to activate the target reference signal resource, after S204, the terminal may further send or receive the target reference signal resource. In a case that it is determined to activate the target reference signal resource and activate the target TCI state, after S204, the terminal may further send or receive the target reference signal resource by using space-related information (such as a beam) indicated by the target TCI state.

In an example, before S204, at least one target serving cell is in an inactive state, and the target reference signal resource may be used for fast activation of the at least one target serving cell. For example, the terminal may perform operations such as time-frequency tracking, timing obtaining, and AGC by using the received target reference signal resource, to implement fast activation of the at least one target serving cell.

In another example, before S204, the at least one target serving cell has been switched to an active state (for example, the at least one serving cell is configured as an active state by receiving an RRC message or the at least one serving cell is set to an active state by receiving MAC CE signaling), the target reference signal resource may be configured to perform operations such as time-frequency tracking, timing obtaining, and AGC, to accelerate activation completion or data transmission of the at least one serving cell.

In another example, before S204, at least one target serving cell is in an active state, and the target reference signal resource may be used for CSI obtaining of the at least one target serving cell, obtaining of uplink channel information, CSI measurement, beam measurement, beam failure detection, RLM measurement, and RRM measurement. This helps improve communication quality of the target serving cell.

It should be noted that "target" in the target reference signal resource mentioned in the embodiments of this application is merely intended to be distinguished from other reference signal resources, and does not represent a specific meaning. Similarly, "target" in the target TCI state and the target serving cell is also used to be distinguished from another TCI state and another serving cell.

The TCI states mentioned in the embodiments of this application, such as the target TCI state and the first TCI state, may all include other space-related information such as QCL information. In an implementation, the network side device may first configure several target TCI states and/or several first TCI states, and each TCI state may be identified by using an identifier ID. Subsequently, the network side device may perform an activation or deactivation operation on a configured target TCI state and/or first TCI state by using an identifier ID of the TCI state. In another implementation, the network side device may directly indicate to the terminal an identifier ID of a reference signal resource (also referred to as a reference source or a QCL source) that has a same or similar spatial information assumption (such as a same beam) as the target reference signal resource. Optionally, in this case, a serving cell in which the reference source or the QCL source is located and/or a corresponding bandwidth part (Bandwidth Part, BWP) are/is indicated. In this way, the terminal may know a downlink receive beam that is used to receive the target reference signal.

In a case that the target reference signal resource is used to activate at least one target serving cell, the target serving cell may be a secondary cell, or may be a master cell, a primary secondary cell, a master cell group, a secondary cell group, a specific cell group, or the like.

"Activating or deactivating at least one target reference signal resource" may include: activating several target reference signals, or deactivating several target reference signals, or activating some target reference signals and deactivating some other target reference signals. Activating or deactivating the at least one target TCI state is the same as this, and details are not described again.

According to the method for transmitting a reference signal provided in this embodiment of this application, the terminal determines at least one of the following according to the received first indication information: activating or deactivating at least one target reference signal resource; and activating or deactivating at least one target TCI state related to the target reference signal resource, where the target reference signal resource may be used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching. This embodiment of this application helps implement transmission/cancellation of transmission of the target reference signal resource, accelerate activation of the target serving cell, and improve the transmission efficiency or stability of the target serving cell.

Optionally, the target reference signal resource, the target TCI state, the target serving cell, and the first TCI state mentioned in the embodiments of this application satisfy at least one of the following mapping relationships:
(1) One target reference signal resource corresponds to at least one target TCI state. For example, the terminal may simultaneously receive the target reference signal resource by using multiple beams indicated by multiple target TCI states. The multiple beams may be from a same serving cell or different serving cells, and may be related to a same BWP or different BWPs.
(2) One target reference signal resource corresponds to at least one target serving cell. For example, the target reference signal resource may be used to accelerate an activation process of one or more serving cells. The target reference signal resource may be sent by the target serving cell, or may be sent by a serving cell other than the target serving cell.
(3) One target TCI state corresponds to at least one target reference signal resource. For example, the terminal may receive multiple target reference signal resources by using a beam indicated by one target TCI state.
(4) One target TCI state corresponds to at least one target serving cell. For example, the target TCI state may be used to indicate space-related information of at least one target serving cell.
(5) One target serving cell corresponds to at least one target reference signal resource. For example, several target reference signal resources need to be received to activate one target serving cell.
(6) One target serving cell corresponds to at least one target TCI state. For example, the target serving cell may have multiple pieces of space-related information.
(7) One target reference signal resource corresponds to at least one first TCI state.
   For example, one target reference signal resource may be used for activation of multiple first TCI states.
(8) One first TCI state corresponds to at least one target reference signal resource. For example, the terminal needs to receive multiple target reference signal resources to activate the first TCI state.

Optionally, in Embodiment 200, the terminal may determine, according to the first indication information, to activate or deactivate at least one target reference signal resource. The first indication information may be carried in RRC signaling, and the RRC signaling may be at least one of the following.
(1) RRC signaling for sending configuration information corresponding to the target reference signal resource.
   In an example, after the target reference signal resource is configured by using RRC signaling, all or a part of the target reference signal resource may be immediately activated, or the target reference signal resource is activated when configuration information corresponding to the target reference signal resource satisfies any one of the following conditions: The configuration information of the target reference signal resource carries activation indication information of the target reference signal resource; the configuration information of the target reference signal resource includes only one target reference signal resource; and the configuration information of the target reference signal resource carries an identifier of an activated or deactivated target reference signal. It should be noted that an idea of the method described in an embodiment or a description in this specification may be applied to another embodiment and a description part in this specification. For ease of description, similar operations are not described again below.
   Because the target reference signal resource is used in the following processes of the target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching, enabling or disabling of configuration information related to these processes of the target serving cell may also be used to determine to activate or deactivate the target reference signal resource.
(2) RRC signaling for sending activation or deactivation indication information corresponding to the target reference signal resource.
(3) RRC signaling for configuring at least one target serving cell corresponding to the target reference signal resource as an activated state or a deactivated state.
   For example, if an RRC reconfiguration message is configured as an activated state when a secondary cell is added, after receiving the RRC reconfiguration message, UE may immediately activate a target reference signal resource corresponding to the secondary cell. Further, the UE performs an activation operation only when the UE has a configured target reference signal resource. For another example, if the RRC reconfiguration message is configured as a deactivated state when a secondary cell is added, the terminal does not activate a target reference signal resource corresponding to the secondary cell when receiving the RRC reconfiguration message. In an implementation, after the serving cell is deactivated by the terminal (for example, an SCell deactivation timer (Scell deactivation timer) expires), a target reference signal resource related to the serving cell may be deactivated.
(4) RRC signaling for configuring at least one target TCI state corresponding to the target reference signal resource as an activated state or a deactivated state.
(5) RRC signaling for configuring at least one serving cell related to the target reference signal resource as an activated state or a deactivated state.
   Because the target reference signal resource may be located in the target serving cell or another serving cell other than the target serving cell, activation of the another serving cell may trigger activation of the target reference signal resource, and/or deactivation of the another serving cell may trigger deactivation of the target reference signal resource.
(6) RRC signaling for configuring at least one first TCI state corresponding to the target reference signal resource as an activated state or a deactivated state.
(7) RRC signaling for configuring at least one serving cell related to at least one first TCI state as an activated state or a deactivated state.
(8) RRC signaling for configuring a bandwidth part BWP corresponding to the target reference signal resource as an activated state or a deactivated state.

It should be noted that the foregoing (1) to (8) may be different RRC signaling, or at least two of the foregoing (1) to (8) may be same RRC signaling, for example, the foregoing (1) and (2) are same RRC signaling, and the RRC signaling carries not only configuration information corresponding to the target reference signal resource but also activation indication information corresponding to the target reference signal resource.

Optionally, in Embodiment 200, the terminal may determine, according to the first indication information, to activate or deactivate at least one target TCI state. The first indication information may be carried in RRC signaling, and the RRC signaling may be at least one of the following:
(1) RRC signaling for sending configuration information corresponding to the target TCI state.
(2) RRC signaling for sending activation or deactivation indication information corresponding to the target TCI state.
(3) RRC signaling for configuring at least one target reference signal resource corresponding to the target TCI state as an activated state or a deactivated state.
(4) RRC signaling for configuring at least one target serving cell corresponding to the target TCI state as an activated state or a deactivated state.
(5) RRC signaling for configuring at least one serving cell related to at least one target TCI state as an activated state or a deactivated state.
(6) RRC signaling for configuring a BWP corresponding to the target TCI state as an activated state or a deactivated state.

It should be noted that the foregoing (1) to (6) may be different RRC signaling, or at least two of the foregoing (1) to (6) may be same RRC signaling, for example, the foregoing (1) and (2) are same RRC signaling. The RRC signaling carries not only configuration information corresponding to the target TCI state but also activation indication information corresponding to the target TCI state.

Optionally, the first indication information mentioned in Embodiment 200 may be carried in first MAC CE signaling, and the first MAC CE signaling may be at least one of the following:
(1) MAC CE signaling of activating or deactivating at least one target serving cell.
(2) MAC CE signaling of activating or deactivating at least one serving cell related to at least one target reference signal resource.
(3) MAC CE signaling of activating or deactivating at least one serving cell related to at least one target TCI state.
(4) MAC CE signaling of activating or deactivating at least one first TCI state.
(5) MAC CE signaling of activating or deactivating at least one serving cell related to at least one first TCI state.

It should be noted that the foregoing (1) to (5) may be different MAC CE signaling, or at least two of the foregoing (1) to (5) may be same MAC CE signaling. Different MAC CEs are identified by using different logical channel identifier (Logical Channel ID, LCID) fields or extended logical channel identifier (Extended logic channel ID, eLCID) fields.

(1), (2), (3), and (5) may be secondary cell activation/deactivation MAC CEs, or may be special cell activation/deactivation MAC CEs, or cell group activation/deactivation MAC CEs. (4) may be a PDSCH TCI state activation/deactivation MAC CE or a PDCCH TCI state activation/deactivation MAC CE, or may be a semi-static CSI-RS resource set activation/deactivation MAC CE. In an implementation, one MAC CE used to activate or deactivate the target TCI state may also be used to instruct to activate or deactivate the target reference signal.

Optionally, the first indication information mentioned in Embodiment 200 may be carried in second MAC CE signaling, and the second MAC CE signaling includes at least one of the following fields.
(1) A first length field, where the first length field is used to indicate a length of the second MAC CE signaling, and the length may be an OCTET quantity or a byte quantity of the second MAC CE.
(2) A target reference signal resource indication field, where the target reference signal resource indication field is used to indicate first related information of at least one target reference signal resource.

In the embodiments of this application, a target reference signal resource and a target reference signal resource set may be interchanged. Which statement is used depends on a structure of a target reference signal resource configured on a network side.

In an implementation, the target reference signal resource indication field may indicate first related information of at least one target reference signal resource. In another implementation, the second MAC CE may carry several target reference signal resource indication fields, where each target reference signal resource indication field is used to indicate first related information of one target reference signal resource.

(3) A target TCI state indication field, where the target TCI state indication field is used to indicate second related information of at least one target TCI state.

In an implementation, the target TCI state indication field may indicate second related information of at least one target TCI state. In another implementation, the second MAC CE may carry several target TCI state indication fields, where each target TCI state indication field is used to indicate second related information of one target TCI state.

(4) At least one target serving cell identifier ID field, where the target serving cell ID field is used to indicate an ID of the target serving cell.

Optionally, if an indicated serving cell belongs to a specific serving cell set, the MAC CE may be applied to some or all serving cells in the serving cell set. Optionally, when the target serving cell identifier ID field does not appear, it may indicate that the MAC CE is applied to a specific serving cell (for example, a special cell (Special Cell, SpCell)), or a specific serving cell group (for example, a master cell group (Master Cell Group, MCG) or a secondary cell group (Secondary Cell Group, SCG)). Certainly, the LCID or eLCID field of the second MAC CE may also be used as an alternative.

(5) A target serving cell bitmap field, where a bit in the target serving cell bitmap field of a preset length is used to indicate third related information of the target serving cell corresponding to the bit.

The bitmap field may be in a form of a bitmap (bitmap), and each bit or bit block is used to indicate third related information of a corresponding target serving cell.

For example, the target serving cell bitmap field may be represented as a Ci field, and is used to indicate third related information corresponding to a serving cell identified by *ServCellIndex* i.

In actual application, the foregoing (4) and (5) generally do not appear at the same time, and only one of them appears.

(6) At least one BWP ID field, where the BWP ID field is used to indicate an uplink and/or downlink BWP corresponding to the target reference signal resource and/or the target TCI state.

Optionally, if the MAC CE is applied to a group of serving cells, the UE ignores the BWP ID field. Optionally, the field may not implicitly indicate that the MAC CE is applied to a specific BWP, for example, a bandwidth part (first active UL/DL BWP) of a first activated uplink (UpLink, UL)/downlink (DownLink, DL) or a current active BWP (for example, in the MAC CE received by the terminal, the serving cell ID field corresponds to an SCell 1 and the BWP ID field does not appear, and if the SCell 1 is currently in a deactivated state, the UE activates the SCell 1 and the MAC CE is applied to a first active BWP of the SCell 1; for another example, in a same condition, if the SCell 1 is currently in an activated state and there is an active BWP, the UE applies the MAC CE to a BWP in an activated state).

(7) A first TCI state ID field, where the first TCI state ID field is used to indicate an ID of at least one first TCI state.

(8) A first TCI state bitmap field, where bits of a preset length in the first TCI state bitmap field are used to indicate fourth related information of the first TCI state corresponding to the bits.

It should be noted that the foregoing "field" may be understood as carrying several bits or octets (OCTET) or bytes of the indication information. One field may further include several subfields, and each subfield may also include several bits or OCTETs that carry indication information.

In actual application, the foregoing (7) and (8) generally do not appear at the same time, and only one of them appears.

It should be noted that the foregoing (1) to (8) may be different MAC CE signaling, or at least two of the foregoing (1) to (8) may be same MAC CE signaling. The foregoing (1) to (8) may be any combination of two to form one instance of the second MAC CE, and each instance of the second MAC CE is identified by using a new LCID or eLCID field. Different second MAC CE signaling is identified by using different LCID or eLCID fields.

It should be noted that, in the foregoing (2), one target reference signal resource and more than one target reference signal resource may be indicated. When the MAC CE is used to indicate one target reference signal resource, the MAC CE may be identified by using one LCID field. When the MAC CE is used to indicate more than one target reference signal resource, the MAC CE may be identified by using another LCID field. In this way, when receiving the MAC CE, the UE may also determine a length of the MAC CE according to the LCID field or determine, according to the LCID field, information about a quantity of target reference signal resources included in the MAC CE. It may be understood that the same method is also applicable to the foregoing (3) to (8). For example, a MAC CE used to indicate a target reference signal resource of one target serving cell and a MAC CE used to indicate a target reference signal resource of more than one target serving cell may be different, and are identified by using different LCID fields or eLCID fields.

On the basis that the first indication information in the foregoing embodiment is the second MAC CE signaling, the method in Embodiment 200 further includes the following step: The terminal determines at least one of the following according to the first indication information:
(1) activating or deactivating at least one target serving cell;
(2) activating or deactivating at least one first TCI state; and
(3) activating the BWP indicated by the BWP ID field.

It may be understood that when the terminal receives the second MAC CE, and activates the target reference signal resource of the target serving cell and/or the target TCI state according to the second MAC CE, the second MAC CE may activate the target serving cell at the same time. Optionally, the second MAC CE carries an activation/deactivation indication field of the target serving cell. Alternatively, the second MAC CE may implicitly indicate, in a case that the target reference signal resource and/or the target TCI state are/is activated, to activate a target serving cell corresponding to the second MAC CE. Optionally, in a case that the target serving cell is deactivated, the target serving cell is activated, and in a case that the target serving cell is activated, the target serving cell is kept in an activated state.

When the terminal receives the second MAC CE, and activates the target reference signal resource of the first TCI state and/or the target TCI state according to the second MAC CE, the second MAC CE may activate the first TCI state at the same time. Optionally, the second MAC CE carries an activation/deactivation indication field of the first TCI state. Alternatively, the second MAC CE may implicitly indicate, in a case that the target reference signal resource and/or the target TCI state are/is activated, to activate a first TCI state corresponding to the second MAC CE. Optionally, in a case that the first TCI state is deactivated, the first TCI state is activated, and in a case that the first TCI state is active, the first TCI state is kept as an activated state.

When the second MAC CE includes the BWP ID field, the field may be used to indicate a BWP related to the target reference signal resource and/or the target TCI state, or may be used to instruct the terminal to switch to a BWP indicated by the BWP ID field.

Optionally, the target reference signal resource indication field mentioned in the foregoing embodiment includes at least one of the following fields.
(a) A second length field, where the second length field is used to indicate a length of the target reference signal resource indication field.
(b) A target reference signal resource purpose field, where the target reference signal resource purpose field is used to indicate the purpose or usage of the activated or deactivated target reference signal resource.

In an implementation, the target reference signal resource purpose field may be used to instruct to activate or deactivate at least one type of target reference signal resource. For example, if RRC configures corresponding target reference signal resources for AGC, time-frequency tracking, CSI-RS, and an activated first TCI state, the field may use a bitmap of four bits, which are respectively corresponding to whether target reference signal resources with purposes (purpose) ACG, time-frequency tracking, CSI-RS, and the activated first TCI state are activated.

(c) At least one first activation state field, where the first activation state field is used to instruct to activate or deactivate at least one target reference signal resource.

The first activation state field may be used to instruct to activate all target reference signals indicated in the second MAC CE, or instruct to deactivate all target reference signals indicated in the second MAC CE, or indicate a target reference signal that is indicated in the second MAC CE and on which an activation operation is to be performed, or a target reference signal on which a deactivation operation is to be performed (for example, one first activation state field may be set for each target reference signal, or one first activation state field may be set for each target reference signal indicated in the second MAC CE, and locations of the first activation state fields may be consistent with locations of indicated target reference signals in the second MAC CE, or may be consistent with ascending or descending sequences of IDs of target reference signals). For example, the first activation state field may carry one bit. When a value is 1, it indicates that all target reference signals indicated in the second MAC CE are activated, and when a value is 0, it indicates that all target reference signals are deactivated. In another example, when the first activation state field does not appear, there may be a default meaning, for example, all target reference signals indicated in the second MAC CE are activated by default.

(d) At least one target reference signal resource ID field, where the target reference signal resource ID field is used to indicate an ID of the activated or deactivated target reference signal resource, or is used to indicate an ID of the target reference signal resource corresponding to the activated or deactivated target TCI state.

For example, in a case that when the second MAC CE is received, the target reference signal resource is not triggered or activated, the MAC CE may be used to activate the target reference signal resource, and in this case, this field may be used to indicate an ID of the activated target reference signal resource. For another example, in a case that when the second MAC CE is received, the target reference signal resource is already triggered or activated, the MAC CE may be used to deactivate the target reference signal resource, and in this case, this field may be used to indicate an ID of the deactivated target reference signal resource. For another example, in a case that when the second MAC CE is received, the target reference signal resource is already triggered or activated, the MAC CE may be used to deactivate a target TCI state corresponding to the target reference signal resource, and in this case, this field may be used to indicate the ID of the target reference signal resource, that is, may be understood as to indicate that the MAC CE is to activate a target TCI state corresponding to which target reference signal resource.

(e) A target reference signal resource bitmap field, where bits of a preset length in the target reference signal resource bitmap field are used to indicate fifth related information of at least one target reference signal resource corresponding to the bits.

When (d) or (e) does not appear, it may indicate that the MAC CE is applied to a target reference signal resource that is currently in an activated state.

In actual application, the foregoing (d) and (e) generally do not appear at the same time, and only one of them appears.

(f) A repetition field, where the repetition field is used to indicate whether a quantity of transmission times of the activated target reference signal resource is greater than 1.

(g) A repetition quantity field, where the repetition quantity field is used to indicate a quantity of transmission times of the activated target reference signal resource.

(h) A target reference signal resource time domain offset, where the target reference signal resource time domain offset field is used to indicate a time domain offset related to the activated first reference signal.

The target reference signal resource time domain may include:
a first time domain offset that indicates a time domain offset between a first time domain location and a time domain location at which the target reference signal resource is sent, where the first time domain location may be a time unit that includes a target reference signal resource activation command, or a time unit that is used by the UE to send a corresponding uplink feedback; and
a second time domain offset that indicates a time domain offset in a time unit for transmitting the target reference signal resource, for example, in a slot (slot) for transmitting the target reference signal resource, a time domain offset between a symbol for transmitting the target reference signal resource (for the first time) and a first symbol.

Optionally, (f) to (h) may be indicated for multiple target reference signal resources, or separately indicated for each target reference signal resource.
(i) A target reference signal resource quantity field, where the target reference signal resource quantity field is used to indicate a quantity of activated or deactivated target reference signal resources.

Optionally, the target TCI state indication field mentioned in the foregoing embodiment includes at least one of the following fields.
(a) A third length field, where the third length field is used to indicate a length of the target TCI state indication field.
(b) A second activation state field, where the second activation state field is used to instruct to activate or deactivate at least one target TCI state.

The second activation state field may be used to indicate that all target TCI states indicated in the second MAC CE are activated, or indicate that all target TCI states indicated in the second MAC CE are deactivated, or indicate a target TCI state that is indicated in the second MAC CE and on which an activation operation is to be performed, and a target TCI state on which a deactivation operation is to be performed (for example, one second activation state field may be set for each target TCI state, or one second activation state field is set for each target TCI state indicated in the second MAC CE, and locations of the second activation state fields may be consistent with locations of indicated target TCI states in the second MAC CE, or may be consistent with ascending or descending sequences of IDs of target TCI states). For example, the second activation state field may carry one bit. When a value is 1, it indicates that all target TCI states indicated in the second MAC CE are activated, and when a value is 0, it indicates that all target TCI states are deactivated. In another example, when the second activation state field does not appear, there may be a default meaning, for example, all target TCI states indicated in the second MAC CE are activated by default.

(c) A target TCI state ID field, where the target TCI state ID field is used to indicate an ID of the activated or deactivated target TCI state.

(d) A target TCI state bitmap field, where bits of a preset length in the target TCI state bitmap field are used to indicate a target status of the target TCI state corresponding to the bits, and the target status includes an activated state or a deactivated state.

In actual application, the foregoing (c) and (d) generally do not appear at the same time, and only one of them appears.

(e) A second TCI state ID_{i.j} field, where the second TCI state ID_{i.j} field is used to indicate an ID of a j-th target TCI state of an i-th code point in an activated or deactivated downlink control information DCI Transmission Configuration indicator field.

(f) A first resource ID field, where the first resource ID field is used to indicate a resource ID of a first resource, and the first resource is used to provide a quasi-co-located QCL source of the target reference signal resource.

(g) A first resource serving cell field, where the first resource serving cell field is used to indicate a serving cell in which the first resource is located.

(h) A first resource BWP ID field, where the first resource BWP ID field is used to indicate a BWP corresponding to the first resource or a serving cell in which the first resource is located.

(i) An aperiodic trigger state bitmap field, where bits of a preset length of the aperiodic trigger state bitmap field are used to indicate a selection status of an aperiodic trigger state corresponding to the bits.

Optionally, the third related information mentioned in the foregoing embodiment includes at least one of the following:
(a) a target status of the target serving cell, where the target status includes an activated state or a deactivated state;
(b) whether the target reference signal resource indication field corresponding to the target serving cell appears;
(c) whether the target TCI state indication field corresponding to the target serving cell appears; and
(d) whether the BWP ID field corresponding to the target serving cell appears.

For example, four bits are used to indicate one target serving cell, and in this case, the first four bits 1100 may indicate that the UE activates the target serving cell, the target reference signal resource indication field corresponding to the target serving cell appears, the target TCI state indication field corresponding to the target serving cell does not appear, and the BWP ID field corresponding to the target serving cell does not appear. For another example, one bit is used to indicate one target serving cell, and in this case, the first bit 1 may also be used to indicate that the target serving cell is activated, the target reference signal resource indication field corresponding to the target serving cell appears, the target TCI state indication field corresponding to the target serving cell appears, and the BWP ID field corresponding to the target serving cell appears.

According to an identifier ServCellIndex of the serving cell, octets including the target reference signal resource indication field, the target TCI state indication field, and the BWP ID field of the target serving cell may appear in ascending or descending order.

Optionally, the fourth related information mentioned in the foregoing embodiment includes at least one of the following:
(a) a target status of the first TCI state, where the target status includes an activated state or a deactivated state;
(b) whether the target reference signal resource indication field corresponding to the first TCI state appears; and
(c) whether the target TCI state indication field corresponding to the first TCI state appears.

Optionally, the fifth related information mentioned in the foregoing embodiment includes at least one of the following:
(a) a target status of the target reference signal, where the target status includes an activated state or a deactivated state;
(b) whether the target TCI state indication field corresponding to the target reference signal appears; and
(c) whether the first TCI state ID field or the first TCI state bitmap field corresponding to the target reference signal appears.

Optionally, the first indication information mentioned in the foregoing embodiments may be further used to activate a CSI-RS resource. The first indication information further includes at least one of the following:
(1) CSI-RS activation or deactivation information, where the CSI-RS activation or deactivation information is used to instruct to activate or deactivate a preconfigured CSI-RS resource set;
(2) CSI-RS ID information, where the CSI-RS ID information is used to indicate an ID of an activated or deactivated CSI-RS resource set; and
(3) TCI state information of a CSI-RS, where the TCI state information of the CSI-RS is used to indicate a QCL source of an activated or deactivated CSI-RS resource set.

Optionally, in the foregoing embodiments, before the terminal receives the first indication information, the method further includes: receiving, by the terminal, first configuration information, where the first configuration information includes at least one of the following: configuration information of the target reference signal resource, and configuration information of the target TCI state.

Optionally, the target reference signal resource includes at least one of the following:
(1) one or more target reference signals;
(2) one or more target reference signal sets, where each target reference signal set may include one or more target reference signals; and
(3) a list of one or more target reference signal sets, where each target reference signal set may include one or more target reference signals.

Optionally, the first configuration information may include at least one of the following:
(1) an absolute time domain location or interval in which the target reference signal resource appears;
(2) information about a quantity of target reference signal resources;
(3) first time domain offset information, where the first time domain offset information is used to indicate a time domain offset between a first time domain location and a time domain location at which the target reference signal resource is sent;
(4) second time domain offset information, where the second time domain offset information is used to indicate a time domain offset in a time unit for transmitting the target reference signal resource;
(5) a quantity of transmission times and time domain period information of the target reference signal resource;
(6) activation or deactivation indication information of the target reference signal resource;
(7) an ID of the target reference signal resource that needs to be activated or deactivated;
(8) usage or purpose information of the target reference signal resource;
(9) a time domain offset between target reference signal resources used for different measurement purposes;
(10) activation or deactivation indication information of the target TCI state; and
(11) an ID of the target TCI state that needs to be activated or deactivated.

To describe in detail the method for transmitting a reference signal provided in the foregoing embodiments of this application, the method for transmitting a reference signal is to be described below in conjunction with several specific embodiments.

### Embodiment 1

In this embodiment, when adding a target serving cell as an activated state by using RRC signaling, a network side device triggers activation of a target reference signal resource and/or a target TCI state. This embodiment includes the following steps:
Step 1: A terminal (UE) receives RRC signaling, performs an addition operation of secondary cells 1, 3, and 5 according to the RRC signaling, and initializes the added secondary cells 1, 3, and 5 to an activated state.
Step 2: If the RRC message carries resource configuration of a target reference signal, the UE directly activates target reference signal resources corresponding to the secondary cells 1, 3, and 5, or activates the target reference signal in a case that the RRC message carries a target reference signal activation indication (including an ID of a target reference signal that needs to be activated).
Step 3: If the configuration of the target reference signal resource carries TCI state configuration, the UE directly activates a TCI state of a target reference signal corresponding to the secondary cell (for example, only one TCI state is configured), or activates a TCI state in a case that it is indicated in the configuration of the target reference signal resource that the TCI state is activated (for example, an activation/deactivation indication of the TCI state or an ID of a TCI state that needs to be activated/deactivated).

This embodiment may be further applied to a scenario in which RRC signaling directly activates SpCell or activates a cell group, that is, a serving cell and a serving cell group activation command implicitly indicate activation of the target reference signal resource and/or a TCI state corresponding to the target reference signal resource.

### Embodiment 2

In this embodiment, first MAC CE triggers or activates a preconfigured target reference signal resource and/or a TCI state corresponding to the target reference signal resource. The first MAC CE may be legacy secondary cell activation/deactivation signaling (Legacy SCell A/D). This embodiment includes the following steps:
Step 0: UE receives configuration of a target reference signal resource, and in this case, an SCell is in a deactivated state.
Step 1: The UE receives an R15/R16 SCell activation/deactivation MAC CE (that is, a first MAC CE). The UE activates secondary cells 1, 3, and 5 according to an indication of the first MAC CE.
Step 2: The UE activates target reference signal resources preconfigured on the secondary cells 1, 3, and 5 while or after activating the secondary cells 1, 3, and 5.
Step 3: The UE activates a TCI state corresponding to the target reference signal resource when or after activating the secondary cells 1, 3, and 5, or when or after activating the target reference signal resources preconfigured on the secondary cells 1, 3, and 5.

This embodiment may be further applied to a scenario in which the first MAC CE activates an SpCell or activates a cell group, that is, a serving cell and a serving cell group activation command implicitly indicate activation of the target reference signal resource and the TCI state corresponding to the target reference signal resource.

### Embodiment 3

In this embodiment, a second MAC CE (such as a newly defined MAC CE) may activate a target TCI state corresponding to a target reference signal resource or a target reference signal resource; or simultaneously activate a target reference signal resource and a TCI state corresponding to the target reference signal resource; or simultaneously activate a target serving cell, a target reference signal resource, and a TCI state corresponding to the target reference signal resource.

Embodiment 3 is described below by using Example 1 and Example 2.

### Example 1

In Example 1, a first MAC CE activates an SCell, and the second MAC CE activates a target reference signal resource in a single target serving cell and a TCI state corresponding to the target reference signal resource. Example 1 includes the following steps:
Step 0: UE receives configuration of a target reference signal resource, where an SCell is in a deactivated state.
Step 1: The UE receives an R15/R16 SCell activation/deactivation MAC CE (that is, a first MAC CE). The UE activates a secondary cell 1 according to an indication of the first MAC CE.
Step 2: The UE receives the first second MAC CE while or after activating the secondary cell 1. The first second MAC CE mentioned herein is used to activate a target reference signal resource corresponding to the secondary cell 1.
Step 3: While or after activating the secondary cell 1, or while or after activating a target reference signal resource preconfigured on the secondary cell 1, the UE receives the second second MAC CE. The second second MAC CE is used to instruct to activate a TCI state corresponding to the target reference signal resource.

The second second MAC CE in the second step may be a MAC CE defined in R15/R16 and used to activate a TCI state of a PDSCH or a PDCCH, or may be a newly defined second MAC CE.

In this embodiment, the first MAC CE and the second MAC CE may be identified by one logical channel identifier (LCID) or different LCIDs.

### Example 2

In Example 2, a second MAC CE activates an Scell, a target reference signal resource on the Scell, and a TCI state corresponding to the target reference signal resource. Example 2 includes the following steps:
Step 0: UE receives configuration of a target reference signal resource, where an SCell is in a deactivated state.
Step 1: The UE receives a second MAC CE, and performs, according to the second MAC CE, operations of activating a secondary cell 1, the target reference signal resource, and a TCI state corresponding to the target reference signal resource.

### Embodiment 4

This embodiment mainly describes a possible case of a second MAC CE. The second MAC CE in this embodiment may be used to activate a target reference signal resource (subsequently described by using a TRS) on a single serving cell.

In this embodiment, the second MAC CE is identified by an LCID field or an extended logical channel identifier (eLCID) field included in a MAC sub-header. The second MAC CE may be of a variable length or a fixed length, which is not limited herein. The second MAC CE is used to activate a TRS of a serving cell, and may include at least one of the following fields.

Serving cell ID field: This field indicates an ID of a serving cell that uses the second MAC CE. The serving cell may be an SCell or an SpCell. Optionally, if the indicated serving cell belongs to a specific serving cell set (for example, a network-configured serving cell set), the second MAC CE may be applied to some or all serving cells in the serving cell set. Optionally, when the field does not appear, it may indicate that the second MAC CE is applied to a specific serving cell (for example, an SpCell) or a specific serving cell group (for example, an MCG or an SCG).

BWP ID field: This field indicates a BWP of a corresponding serving cell or serving cell group. Optionally, if the second MAC CE is applied to a group of serving cells, UE ignores this field. Optionally, the field may implicitly indicate that the second MAC CE is applied to a specific BWP, such as a first activated UL/DL BWP or a currently activated BWP.

For example, if the terminal receives the second MAC CE, and the serving cell ID field corresponds to an Scell 1 and the BWP ID field does not appear, if the Scell 1 is currently in a deactivated state, the UE activates the Scell 1 and the second MAC CE is applied to the first activated BWP of the Scell 1. For another example, in a same condition, if the Scell 1 is currently in an activated state and has an active BWP, the UE applies the second MAC CE to a BWP in which the Scell 1 is currently in an activated state.

TRS purpose field: This field is used to indicate the purpose and usgae of a TRS resource (resource set) (TRS resource (set)) to be activated or deactivated. For example, RRC ACG separately configures corresponding TRS resource sets for ACG, time domain/frequency domain tracing, and CSI-RS, and in this case, the second MAC CE may use a bitmap (bitmap) of three bits, which are respectively corresponding to whether TRSs whose purposes are separately ACG, time domain/frequency domain tracing, and CSI-RS are activated.

TRS (set) ID field: This field indicates an ID of a TRS resource (set) to be activated or deactivated. There may be one TRS (set) ID field, or there may be one TRS (set) ID field for each activated TRS purpose.

Activation (A)/Deactivation (D) field: This field indicates that a corresponding TRS (set) is activated or deactivated. When a value is a first value (for example, 1), it indicates activation, and another value may indicate deactivation. All TRSs (set) indicated in the second MAC CE may share one A/D field, or each TRS (set) has one corresponding A/D field.

TRS (set) bitmap: This field indicates a TRS (set) at a corresponding location to be activated or deactivated. When a value is a first value (for example, 1), it indicates activation, and another value may indicate deactivation.

Repetition field: This field is used to indicate whether a TRS (set) is sent more than once.

Repetition quantity field: This field is used to indicate a quantity of times of sending a TRS (set).

TRS offset field: This field indicates at least one of the following:
A first time domain offset: which indicates a time domain offset between a first time domain location and a time domain location for sending a TRS resource/TRS resource set, where the first time domain location may be a time unit that includes a TRS resource/TRS resource set activation command (RRC/MAC CE/DCI), or a time unit in which the UE sends an uplink feedback;
A second time domain offset: which indicates a time domain offset in a time unit for transmitting a TRS resource/TRS resource set, for example, within a slot for transmitting the TRS resource/TRS resource set, a time domain offset between a symbol for transmitting the TRS resource/TRS resource set (for the first time) and the first symbol.
A TRS quantity field: which is used to indicate a quantity of TRS resources;
A C field: which is used to indicate whether a byte that includes the foregoing specific field appears;
R: a reserved bit.

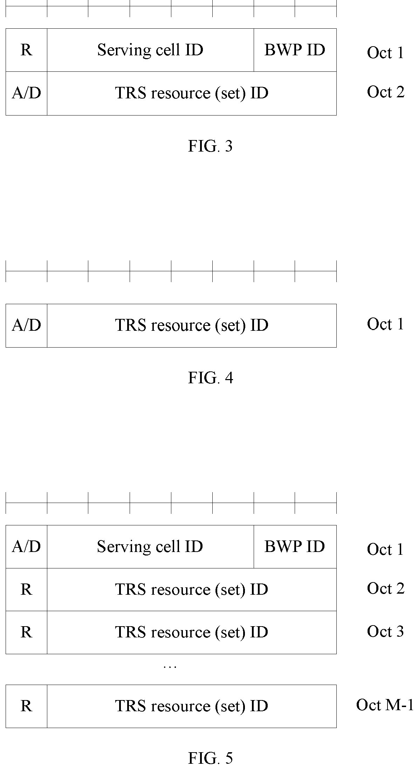

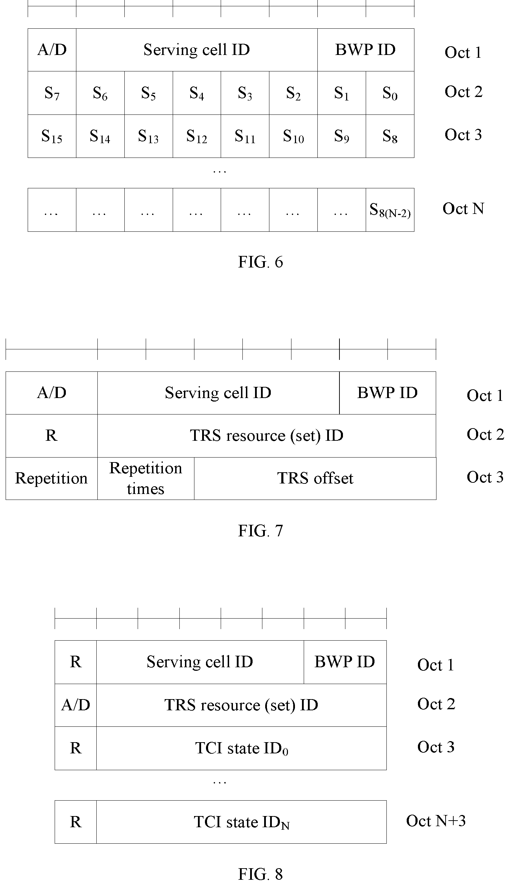

As shown in FIG. 3 to FIG. 7, FIG. 3 to FIG. 7 show some examples of the second MAC CE described in Embodiment 4. An S field in FIG. 6 indicates that a TRS bitmap field is used to instruct to activate/deactivate a TRS of a serving cell.

The second MAC CE described in this embodiment may be sent in a local cell (in this case, a serving cell ID may not appear), or may be sent in another cell, for example, a primary cell (Primary cell, PCell), a primary secondary cell (Primary Secondary Cell, PSCell), and another SCell.

### Embodiment 5

This embodiment mainly describes a possible case of the second MAC CE. The second MAC CE in this embodiment may be used to activate TCI states corresponding to one or more TRS resources (used for a single cell (for single cell)) or a resource set, or simultaneously activate one or more TRSs and one or more TCI states.

In this embodiment, the second MAC CE is identified by an LCID field or an eLCID field included in a MAC sub-header. The second MAC CE may be of a variable length or a fixed length, which is not limited herein. The second MAC CE is used to activate a TCI state corresponding to a TRS, and includes at least one of the following fields:
Serving cell ID field/BWP ID field/repetition field/repetition times field/TRS offset field/C field: the usage is the same as that in Embodiment 4.

TRS (set) ID field: the usage is the same as that in Embodiment 4, and if the field does not appear, the second MAC CE is applied to a TRS that is currently in an activated state or that is to be activated.

A/D field: the usage is the same as that in Embodiment 4. Optionally, this field does not appear. If a TRS indicated by a corresponding TRS (set) ID field is in an activated state, the second MAC CE is not used to activate the TRS. Otherwise, if the TRS indicated by the corresponding TRS (set) ID field is in a deactivated state, the MAC CE may be used to activate the TRS.

TRS (set) bitmap field: the usage is the same as that in Embodiment 4. If this field does not appear, the second MAC CE is applied to a TRS that is currently in an activated state or that is to be activated.

TCI state ID field: This field is an ID of one to more TCI states (for example, a TCI state ID (TCI-StateId), and optionally, a preconfigured TCI state may be dedicated to a temporary reference signal), or a TCI state configured in physical downlink shared channel configuration (PDSCH-Config), or a TCI state configured in PDCCH-Config, and is used to indicate a QCL source of an activated TRS resource. For example, a TCI state ID 0 indicates a TCI state of the first TRS resource in the TRS ID field, and a TCI state ID 1 indicates a TCI state of the second TRS resource. Optionally, if the A/D field instructs to deactivate a TRS resource, this field does not appear.

TCI state ID_{i,j} field: This field is used to indicate an ID of a j-th TCI state of an i-th code point of a DCI Transmission Configuration indicator (Transmission configuration indication) field.

First Tᵢ field: This field is used to indicate an activation/deactivation state of a TCI state i (TCI-StateId = i). This field may indicate states of multiple TCI states in a form of a bitmap. For example, when a value of T1 is a first value, it indicates that a state of a TCI state i is an activated state, and when the value of T1 is a second value, it indicates a deactivated state. Optionally, that the value of T1 is the first value further indicates that a corresponding TCI state further needs to be mapped to a code point of a DCI predefined field (for example, a Transmission Configuration indicator field (Transmission Configuration Indication field)). Mapping (position in DCI) can be determined according to the location of the TCI state i appeared in the second MAC CE.

Resource IDᵢ: used to indicate a resource ID of a QCL source of a TRS.

Resource Serving Cell IDᵢ: used to indicate a serving cell in which the resource IDᵢ is located.

Resource BWP IDᵢ: used to indicate a BWP corresponding to the serving cell in which the resource IDᵢ is located.

Second Tᵢ field: This field is used to indicate a selection status of an aperiodic trigger state (Aperiodic Trigger States configured within aperiodic Trigger State List) preconfigured by RRC, and may be indicated in a form of a bitmap. For example, T0 represents the first trigger state in a preconfigured aperiodic trigger state list, and T1 represents the second trigger state. When T0 is set to a first value (for example, 1), it indicates that an aperiodic trigger state corresponding to T0 needs to be mapped to a code point of a DCI predefined field (for example, a CSI request field (CSI request field)). Mapping can be performed according to a location at which the aperiodic trigger state appears.

If one TCI state is activated by the second MAC CE, QCL of the aperiodic temporary reference signal (Aperiodic-TRS, AP-TRS) corresponds to the TCI state. If the second MAC CE activates N>1 TCI states, there are N AP-TRSs, and QCL of each AP-TRS corresponds to N TCI states; or there are 1≤M<N AP-TRSs, and QCL corresponds to M TCI states in the N TCI states, where the M TCI states may be default TCI states, for example, a TCI state indicated by a code point with a minimum code point index or a TCI state with a minimum TCI index.

Further, there is a correspondence between one or more TRS resources or resource sets and one or more TCI states. Further, the correspondence is configured by configuring the TRS in the TCI state, or a QCL source corresponding to an RS in the TCI state.

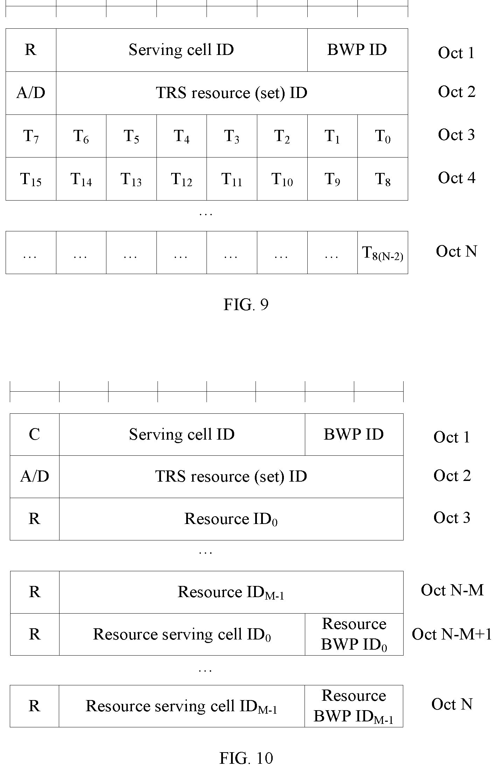

As shown in FIG. 8 to FIG. 10, FIG. 8 to FIG. 10 are some examples of the second MAC CE described in Embodiment 5. In FIG. 9, a T field identifier indicates a TCI state of an activated/deactivated TRS in a TCI state bitmap manner.

### Embodiment 6

This embodiment mainly describes a possible case of a second MAC CE. The second MAC CE in this embodiment may be used to activate TRSs of multiple serving cells and/or corresponding TCI states, or may be used to activate a corresponding serving cell.

The second MAC CE is identified by an LCID field or an eLCID field included in a MAC sub-header. The second MAC CE may be of a variable length or a fixed length, which is not limited herein. The second MAC CE includes at least one of the following fields:
Cᵢ field: used to indicate whether TRS or TCI state for TRS information corresponding to a serving cell identified by ServCellIndex i appears. If a value is 1, it indicates that the TRS or TCI state for TRS information appears. Otherwise, the TRS or TCI state for TRS information does not appear. According to ServCellIndex, bytes including corresponding TRS or TCI state information appear in ascending order.
Length field: used to indicate a quantity of bytes of the second MAC CE.
TRS/TCI state information of each serving cell, i.e., at least one field in the second MAC CE described in Embodiment 4 and Embodiment 5.

Optionally, if a serving cell indicated by the Cᵢ field or the serving cell ID field is in a deactivated state when the serving cell receives the MAC CE, the MAC CE is further used to activate the serving cell.

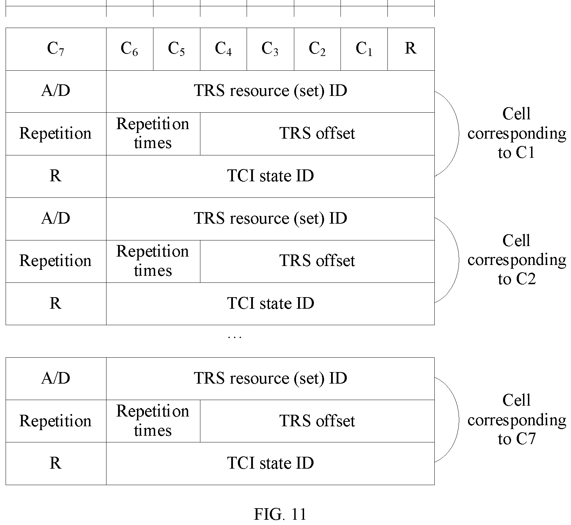

As shown in FIG. 11 to FIG. 13, FIG. 11 to FIG. 12 show some examples of the second MAC CE described in Embodiment 5.

The second MAC CE may be sent in a local cell (in this case, the serving cell ID may not appear), or may be sent in another cell, for example, a PCell, a PSCell, and another SCell.

### Embodiment 7

This embodiment mainly describes a possible case of a second MAC CE. Based on functions of the second MAC CE described in the foregoing embodiments, the second MAC CE in this embodiment may further activate an existing aperiodic CSI-RS resource set, and the second MAC CE may include at least one of the following:
(1) CSI-RS activation or deactivation information, where the CSI-RS activation or deactivation information is used to instruct to activate or deactivate a preconfigured CSI-RS resource set;
(2) CSI-RS ID information, where the CSI-RS ID information is used to indicate an ID of an activated or deactivated CSI-RS resource set; and
(3) TCI state information of a CSI-RS, where the TCI state information of the CSI-RS is used to indicate a QCL source of an activated or deactivated CSI-RS resource set.

### Embodiment 8

This embodiment mainly describes a TRS resource configured by RRC. TRS resource configuration may be configured for each serving cell, each BWP, and each cell group. The TRS resource configuration includes at least one of the following:
(1) One or more TRSs, where each TRS is identified by a TRS ID;
(2) One or more TRS resource sets, where each TRS resource set is identified by a TRS resource set ID;
(3) A list of one or more TRS resource sets (TRS resource set list), where the list includes multiple TRS resource sets.

In this embodiment, the TRS resource set/TRS resource configuration may include at least one of the following:
Absolute time domain location: which indicates a time unit (a time unit such as a slot or a symbol) in which a TRS resource/TRS resource set appears (for the first time).
Absolute time domain interval: This interval may be indicated by a start location and a length, and the length may also be specified based on a protocol.
Quantity of TRS resources or TRS resource sets.
First time domain offset: which indicates a time domain offset between a first time domain location and a time domain location for sending a TRS resource/TRS resource set. The first time domain location may be a time unit that includes a TRS resource/TRS resource set activation command (RRC/MAC CE/DCI), or a time unit in which UE sends a corresponding uplink feedback. If this parameter is not configured in a network, the UE considers that the time domain offset is 0, or is a value agreed upon in a protocol.
Second time domain offset: which indicates a time domain offset in a time unit for transmitting a TRS resource/TRS resource set, for example, within a slot for transmitting the TRS resource/TRS resource set, a time domain offset between a symbol for transmitting the TRS resource/TRS resource set (for the first time) and the first symbol, or a quantity of transmission times and a time domain period of the TRS resource/TRS resource set (if the quantity of transmission times is greater than 1).
Activation/deactivation indication of a TRS resource/TRS resource set.
ID of a TRS resource/TRS resource set that needs to be activated/deactivated.
Usage/purpose of resources: AGC, time-frequency tracking, CSI measurement, and the like.
Time domain offset between TRS resources for different measurement purposes.
QCL information/TCI state: used to indicate at least one TCI state corresponding to the TRS resource/TRS resource set. A QCL source may be an SSB or another RS.
Activation/deactivation indication of a TCI state.
ID of a TCI state that needs to be activated/deactivated.

It should be noted that, the foregoing resources may be separately configured for different measurement purposes.

The foregoing time unit is not limited herein, for example, may be a slot level, a symbol level, or a millisecond level.

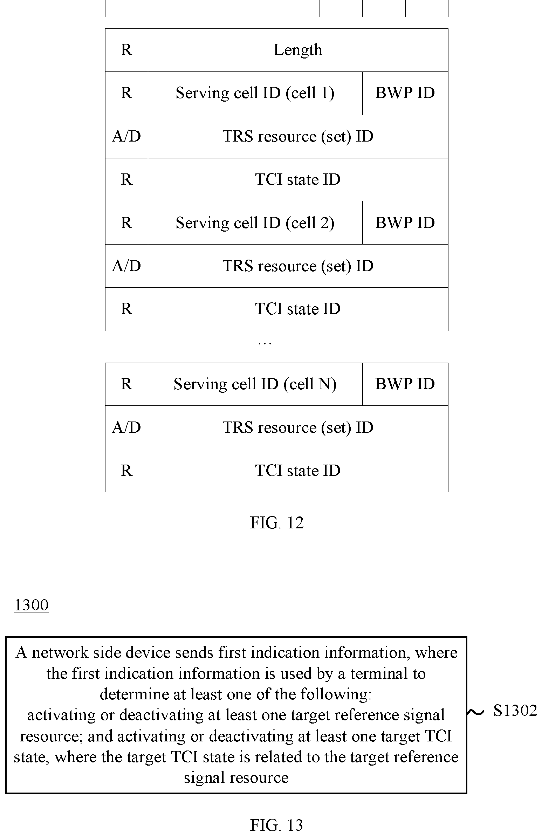

The method for transmitting a reference signal according to the embodiments of this application is described in detail above with reference to FIG. 2 to FIG. 12. A method for transmitting a reference signal according to another embodiment of this application is to be described in detail below with reference to FIG. 13. It can be understood that interaction between a network side device and a terminal described from the perspective of the network side device is the same as that described on a terminal side in the method shown in FIG. 2. To avoid repetition, related descriptions are appropriately omitted.

FIG. 13 is a schematic flowchart for implementing a method for transmitting a reference signal according to an embodiment of this application, and the method may be applied to a network side device. As shown in FIG. 13, the method 1300 includes the following steps:
S1302: A network side device sends first indication information, where the first indication information is used by a terminal to determine at least one of the following: activating or deactivating at least one target reference signal resource; and activating or deactivating at least one target TCI state, where the target TCI state is related to the target reference signal resource.

The target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

In this embodiment of this application, the network side device sends first indication information, and the terminal determines at least one of the following according to the received first indication information: activating or deactivating at least one target reference signal resource; and activating or deactivating at least one target TCI state related to the target reference signal resource, where the target reference signal resource may be used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching. This embodiment of this application helps implement transmission/cancellation of transmission of the target reference signal resource, accelerate activation of the target serving cell, and improve the transmission efficiency or stability of the target serving cell.

Optionally, in an embodiment, the target reference signal resource, the target TCI state, the target serving cell, and the first TCI state satisfy at least one of the following mapping relationships:
(1) One target reference signal resource corresponds to at least one target TCI state.
(2) One target reference signal resource corresponds to at least one target serving cell.
(3) One target TCI state corresponds to at least one target reference signal resource.
(4) One target TCI state corresponds to at least one target serving cell.
(5) One target serving cell corresponds to at least one target reference signal resource.
(6) One target serving cell corresponds to at least one target TCI state.
(7) One target reference signal resource corresponds to at least one first TCI state.
(8) One first TCI state corresponds to at least one target reference signal resource.

Optionally, in an embodiment, the first indication information is used by the terminal to determine to activate or deactivate at least one target reference signal resource. The first indication information is carried in RRC signaling, and the RRC signaling may be at least one of the following:
(1) RRC signaling for sending configuration information corresponding to the target reference signal resource.
(2) RRC signaling for sending activation or deactivation indication information corresponding to the target reference signal resource.
(3) RRC signaling for configuring at least one target serving cell corresponding to the target reference signal resource as an activated state or a deactivated state.
(4) RRC signaling for configuring at least one target TCI state corresponding to the target reference signal resource as an activated state or a deactivated state.
(5) RRC signaling for configuring at least one serving cell related to the target reference signal resource as an activated state or a deactivated state.
(6) RRC signaling for configuring at least one first TCI state corresponding to the target reference signal resource as an activated state or a deactivated state.
(7) RRC signaling for configuring at least one serving cell related to at least one first TCI state as an activated state or a deactivated state.
(8) RRC signaling for configuring a BWP corresponding to the target reference signal resource as an activated state or a deactivated state.

Optionally, in an embodiment, the first indication information is used by the terminal to determine to activate or deactivate at least one target TCI state. The first indication information is carried in RRC signaling, and the RRC signaling may be at least one of the following:
(1) RRC signaling for sending configuration information corresponding to the target TCI state.
(2) RRC signaling for sending activation or deactivation indication information corresponding to the target TCI state.
(3) RRC signaling for configuring at least one target reference signal resource corresponding to the target TCI state as an activated state or a deactivated state.
(4) RRC signaling for configuring at least one target serving cell corresponding to the target TCI state as an activated state or a deactivated state.
(5) RRC signaling for configuring at least one serving cell related to at least one target TCI state as an activated state or a deactivated state.
(6) RRC signaling for configuring a BWP corresponding to the target TCI state as an activated state or a deactivated state.

Optionally, in an embodiment, the first indication information is carried in first MAC CE signaling, and the first MAC CE signaling may be at least one of the following:
(1) MAC CE signaling of activating or deactivating at least one target serving cell.
(2) MAC CE signaling of activating or deactivating at least one serving cell related to at least one target reference signal resource.
(3) MAC CE signaling of activating or deactivating at least one serving cell related to at least one target TCI state.
(4) MAC CE signaling of activating or deactivating at least one first TCI state.
(5) MAC CE signaling of activating or deactivating at least one serving cell related to at least one first TCI state.

Optionally, in an embodiment, the first indication information is carried in second MAC CE signaling, and the second MAC CE signaling may include at least one of the following fields:
(1) A first length field, where the first length field is used to indicate a length of the second MAC CE signaling.
(2) A target reference signal resource indication field, where the target reference signal resource indication field is used to indicate first related information of at least one target reference signal resource.
(3) A target TCI state indication field, where the target TCI state indication field is used to indicate second related information of at least one target TCI state.
(4) At least one target serving cell identifier ID field, where the target serving cell ID field is used to indicate an ID of the target serving cell.
(5) A target serving cell bitmap field, where a bit in the target serving cell bitmap field of a preset length is used to indicate third related information of the target serving cell corresponding to the bit.
(6) At least one BWP ID field, where the BWP ID field is used to indicate an uplink and/or downlink BWP corresponding to the target reference signal resource and/or the target TCI state.
(7) A first TCI state ID field, where the first TCI state ID field is used to indicate an ID of at least one first TCI state.
(8) A first TCI state bitmap field, where bits of a preset length in the first TCI state bitmap field are used to indicate fourth related information of the first TCI state corresponding to the bits.

Optionally, in an embodiment, the first indication information is further used by the terminal to determine at least one of the following:
(1) activating or deactivating at least one target serving cell;
(2) activating or deactivating at least one first TCI state; and
(3) activating the BWP indicated by the BWP ID field.

Optionally, in an embodiment, the target reference signal resource indication field includes at least one of the following fields:
(a) A second length field, where the second length field is used to indicate a length of the target reference signal resource indication field.
(b) A target reference signal resource purpose field, where the target reference signal resource purpose field is used to indicate the purpose or usage of the activated or deactivated target reference signal resource.
(c) At least one first activation state field, where the first activation state field is used to instruct to activate or deactivate at least one target reference signal resource.
(d) At least one target reference signal resource ID field, where the target reference signal resource ID field is used to indicate an ID of the activated or deactivated target reference signal resource, or is used to indicate an ID of the target reference signal resource corresponding to the activated or deactivated target TCI state.
(e) A target reference signal resource bitmap field, where bits of a preset length in the target reference signal resource bitmap field are used to indicate fifth related information of at least one target reference signal resource.
(f) A repetition field, where the repetition field is used to indicate whether a quantity of transmission times of the activated target reference signal resource is greater than 1.
(g) A repetition quantity field, where the repetition quantity field is used to indicate a quantity of transmission times of the activated target reference signal resource.
(h) A target reference signal resource time domain offset, where the target reference signal resource time domain offset field is used to indicate a time domain offset related to the activated first reference signal.
(i) A target reference signal resource quantity field, where the target reference signal resource quantity field is used to indicate a quantity of activated or deactivated target reference signal resources.

Optionally, in an embodiment, the target TCI state indication field includes at least one of the following fields:
(a) A third length field, where the third length field is used to indicate a length of the target TCI state indication field.
(b) A second activation state field, where the second activation state field is used to instruct to activate or deactivate at least one target TCI state.
(c) A target TCI state ID field, where the target TCI state ID field is used to indicate an ID of the activated or deactivated target TCI state.
(d) A target TCI state bitmap field, where bits of a preset length in the target TCI state bitmap field are used to indicate a target status of the target TCI state corresponding to the bits, and the target status includes an activated state or a deactivated state.
(e) A second TCI state ID_{i.j} field, where the second TCI state ID_{i.j} field is used to indicate an ID of a j-th target TCI state of an i-th code point in an activated or deactivated downlink control information DCI Transmission Configuration indicator field.
(f) A first resource ID field, where the first resource ID field is used to indicate a resource ID of a first resource, and the first resource is used to provide a quasi-co-located QCL source of the target reference signal resource.
(g) A first resource serving cell field, where the first resource serving cell field is used to indicate a serving cell in which the first resource is located.
(h) A first resource BWP ID field, where the first resource BWP ID field is used to indicate a BWP corresponding to the first resource or a serving cell in which the first resource is located.
(i) An aperiodic trigger state bitmap field, where bits of a preset length of the aperiodic trigger state bitmap field are used to indicate a selection status of an aperiodic trigger state corresponding to the bits.

Optionally, in an embodiment, the third related information includes at least one of the following:
(a) a target status of the target serving cell, where the target status includes an activated state or a deactivated state;
(b) whether the target reference signal resource indication field corresponding to the target serving cell appears;
(c) whether the target TCI state indication field corresponding to the target serving cell appears; and
(d) whether the BWP ID field corresponding to the target serving cell appears.

Optionally, in an embodiment, the fourth related information includes at least one of the following:
(a) a target status of the first TCI state, where the target status includes an activated state or a deactivated state;
(b) whether the target reference signal resource indication field corresponding to the first TCI state appears; and
(c) whether the target TCI state indication field corresponding to the first TCI state appears.

Optionally, in an embodiment, the fifth related information includes at least one of the following:
(a) a target status of the target reference signal, where the target status includes an activated state or a deactivated state;
(b) whether the target TCI state indication field corresponding to the target reference signal appears; and
(c) whether the first TCI state ID field or the first TCI state bitmap field corresponding to the target reference signal appears.

Optionally, in an embodiment, the first indication information is further used to activate a CSI-RS resource. The first indication information further includes at least one of the following:
(1) CSI-RS activation or deactivation information, where the CSI-RS activation or deactivation information is used to instruct to activate or deactivate a preconfigured CSI-RS resource set;
(2) CSI-RS ID information, where the CSI-RS ID information is used to indicate an ID of an activated or deactivated CSI-RS resource set; and
(3) TCI state information of a CSI-RS, where the TCI state information of the CSI-RS is used to indicate a QCL source of an activated or deactivated CSI-RS resource set.

Optionally, in an embodiment, before the network side device sends the first indication information, the method further includes: sending, by the network side device, first configuration information, where the first configuration information includes at least one of the following: configuration information of the target reference signal resource; and configuration information of the target TCI state.

Optionally, in an embodiment, the target reference signal resource includes at least one of the following:
(1) one or more target reference signals;
(2) one or more target reference signal sets, where each target reference signal set may include one or more target reference signals; and
(3) a list of one or more target reference signal sets, where each target reference signal set may include one or more target reference signals.

Optionally, in an embodiment, the first configuration information includes at least one of the following:
(1) an absolute time domain location or interval in which the target reference signal resource appears;
(2) information about a quantity of target reference signal resources;
(3) first time domain offset information, where the first time domain offset information is used to indicate a time domain offset between a first time domain location and a time domain location at which the target reference signal resource is sent;
(4) second time domain offset information, where the second time domain offset information is used to indicate a time domain offset in a time unit for transmitting the target reference signal resource;
(5) a quantity of transmission times and time domain period information of the target reference signal resource;
(6) activation or deactivation indication information of the target reference signal resource;
(7) an ID of the target reference signal resource that needs to be activated or deactivated;
(8) usage or purpose information of the target reference signal resource;
(9) a time domain offset between target reference signal resources used for different measurement purposes;
(10) activation or deactivation indication information of the target TCI state; and
(11) an ID of the target TCI state that needs to be activated or deactivated.

It should be noted that the method for transmitting a reference signal provided in this embodiment of this application may be performed by an apparatus for transmitting a reference signal, or a control module that is in the apparatus for transmitting a reference signal and that is configured to perform the method for transmitting a reference signal. In this embodiment of this application, that the apparatus for transmitting a reference signal performs the method for transmitting a reference signal is used as an example to describe the apparatus for transmitting a reference signal provided in this embodiment of this application.

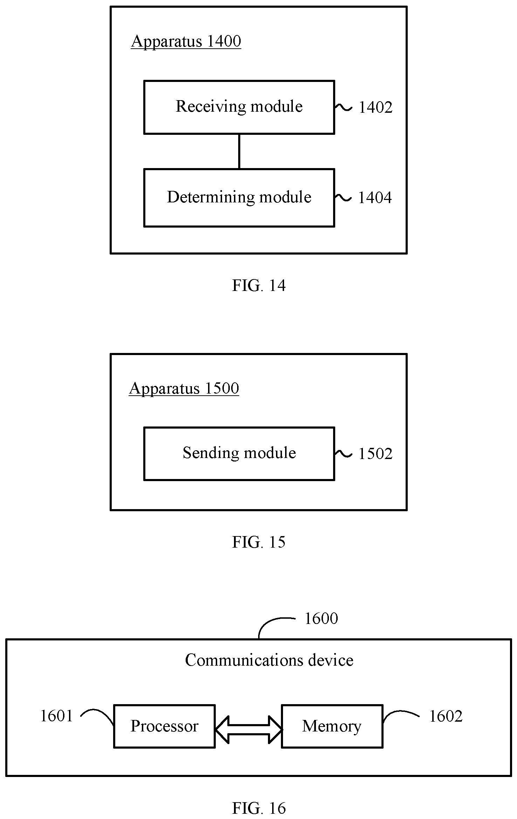

FIG. 14 is a schematic diagram of a structure of an apparatus for transmitting a reference signal according to an embodiment of this application. The apparatus may correspond to a terminal in another embodiment. As shown in FIG. 14, an apparatus 1400 includes the following modules:
a receiving module 1402, configured to receive first indication information; and
a determining module 1404, configured to determine at least one of the following according to the first indication information: activating or deactivating at least one target reference signal resource; and activating or deactivating at least one target TCI state, where the target TCI state is related to the target reference signal resource.

The target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

In this embodiment of this application, the apparatus 1400 determines at least one of the following according to the received first indication information: activating or deactivating at least one target reference signal resource; and activating or deactivating at least one target TCI state related to the target reference signal resource, where the target reference signal resource may be used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching. This embodiment of this application helps implement transmission/cancellation of transmission of the target reference signal resource, accelerate activation of the target serving cell, and improve the transmission efficiency or stability of the target serving cell.

Optionally, in an embodiment, the target reference signal resource, the target TCI state, the target serving cell, and the first TCI state satisfy at least one of the following mapping relationships:
(1) One target reference signal resource corresponds to at least one target TCI state.
(2) One target reference signal resource corresponds to at least one target serving cell.
(3) One target TCI state corresponds to at least one target reference signal resource.
(4) One target TCI state corresponds to at least one target serving cell.
(5) One target serving cell corresponds to at least one target reference signal resource.
(6) One target serving cell corresponds to at least one target TCI state.
(7) One target reference signal resource corresponds to at least one first TCI state.
(8) One first TCI state corresponds to at least one target reference signal resource.

Optionally, in an embodiment, the determining module 1404 determines, according to the first indication information, to activate or deactivate at least one target reference signal resource. The first indication information is carried in RRC signaling, and the RRC signaling may be at least one of the following:
(1) RRC signaling for sending configuration information corresponding to the target reference signal resource.
(2) RRC signaling for sending activation or deactivation indication information corresponding to the target reference signal resource.
(3) RRC signaling for configuring at least one target serving cell corresponding to the target reference signal resource as an activated state or a deactivated state.
(4) RRC signaling for configuring at least one target TCI state corresponding to the target reference signal resource as an activated state or a deactivated state.
(5) RRC signaling for configuring at least one serving cell related to the target reference signal resource as an activated state or a deactivated state.
(6) RRC signaling for configuring at least one first TCI state corresponding to the target reference signal resource as an activated state or a deactivated state.
(7) RRC signaling for configuring at least one serving cell related to at least one first TCI state as an activated state or a deactivated state.
(8) RRC signaling for configuring a BWP corresponding to the target reference signal resource as an activated state or a deactivated state.

Optionally, in an embodiment, the determining module 1404 determines, according to the first indication information, to activate or deactivate at least one target TCI state. The first indication information is carried in RRC signaling, and the RRC signaling may be at least one of the following:
(1) RRC signaling for sending configuration information corresponding to the target TCI state.
(2) RRC signaling for sending activation or deactivation indication information corresponding to the target TCI state.
(3) RRC signaling for configuring at least one target reference signal resource corresponding to the target TCI state as an activated state or a deactivated state.
(4) RRC signaling for configuring at least one target serving cell corresponding to the target TCI state as an activated state or a deactivated state.
(5) RRC signaling for configuring at least one serving cell related to at least one target TCI state as an activated state or a deactivated state.
(6) RRC signaling for configuring a BWP corresponding to the target TCI state as an activated state or a deactivated state.

Optionally, in an embodiment, the first indication information is carried in first MAC CE signaling, and the first MAC CE signaling may be at least one of the following:
(1) MAC CE signaling of activating or deactivating at least one target serving cell.
(2) MAC CE signaling of activating or deactivating at least one serving cell related to at least one target reference signal resource.
(3) MAC CE signaling of activating or deactivating at least one serving cell related to at least one target TCI state.
(4) MAC CE signaling of activating or deactivating at least one first TCI state.
(5) MAC CE signaling of activating or deactivating at least one serving cell related to at least one first TCI state.

Optionally, in an embodiment, the first indication information is carried in second MAC CE signaling, and the second MAC CE signaling may include at least one of the following fields:
(1) A first length field, where the first length field is used to indicate a length of the second MAC CE signaling.
(2) A target reference signal resource indication field, where the target reference signal resource indication field is used to indicate first related information of at least one target reference signal resource.
(3) A target TCI state indication field, where the target TCI state indication field is used to indicate second related information of at least one target TCI state.
(4) At least one target serving cell identifier ID field, where the target serving cell ID field is used to indicate an ID of the target serving cell.
(5) A target serving cell bitmap field, where a bit in the target serving cell bitmap field of a preset length is used to indicate third related information of the target serving cell corresponding to the bit.
(6) At least one BWP ID field, where the BWP ID field is used to indicate an uplink and/or downlink BWP corresponding to the target reference signal resource and/or the target TCI state.
(7) A first TCI state ID field, where the first TCI state ID field is used to indicate an ID of at least one first TCI state.
(8) A first TCI state bitmap field, where bits of a preset length in the first TCI state bitmap field are used to indicate fourth related information of the first TCI state corresponding to the bits.

The apparatus 1400 according to this embodiment of this application may correspond to the procedures of the method 200 in the embodiments of this application, and the units/modules in the apparatus 1400 and the foregoing operations and/or functions are respectively for implementing the corresponding procedures of the method 200 and can achieve a same or equivalent technical effect. For brevity, details are not described herein again.

The apparatus for transmitting a reference signal in this embodiment of this application may be an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The apparatus for transmitting a reference signal provided in this embodiment of this application can implement the processes implemented in the method embodiments in FIG. 2 to FIG. 13, and achieve a same technical effect. To avoid repetition, details are not described herein again.

FIG. 15 is a schematic diagram of a structure of an apparatus for transmitting a reference signal according to an embodiment of this application. The apparatus may correspond to a network side device in another embodiment. As shown in FIG. 15, an apparatus 1500 includes the following modules:
a sending module 1502, configured to send first indication information, where the first indication information is used by a terminal to determine at least one of the following: activating or deactivating at least one target reference signal resource; and activating or deactivating at least one target TCI state, where the target TCI state is related to the target reference signal resource.

The target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

In this embodiment of this application, the apparatus 1500 sends first indication information, and the terminal determines at least one of the following according to the received first indication information: activating or deactivating at least one target reference signal resource; and activating or deactivating at least one target TCI state related to the target reference signal resource, where the target reference signal resource may be used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching. This embodiment of this application helps implement transmission/cancellation of transmission of the target reference signal resource, accelerate activation of the target serving cell, and improve the transmission efficiency or stability of the target serving cell.

Optionally, in an embodiment, the target reference signal resource, the target TCI state, the target serving cell, and the first TCI state satisfy at least one of the following mapping relationships:
(1) One target reference signal resource corresponds to at least one target TCI state.
(2) One target reference signal resource corresponds to at least one target serving cell.
(3) One target TCI state corresponds to at least one target reference signal resource.
(4) One target TCI state corresponds to at least one target serving cell.
(5) One target serving cell corresponds to at least one target reference signal resource.
(6) One target serving cell corresponds to at least one target TCI state.
(7) One target reference signal resource corresponds to at least one first TCI state.
(8) One first TCI state corresponds to at least one target reference signal resource.

Optionally, in an embodiment, the first indication information is used by the terminal to determine to activate or deactivate at least one target reference signal resource. The first indication information is carried in RRC signaling, and the RRC signaling may be at least one of the following:
(1) RRC signaling for sending configuration information corresponding to the target reference signal resource.
(2) RRC signaling for sending activation or deactivation indication information corresponding to the target reference signal resource.
(3) RRC signaling for configuring at least one target serving cell corresponding to the target reference signal resource as an activated state or a deactivated state.
(4) RRC signaling for configuring at least one target TCI state corresponding to the target reference signal resource as an activated state or a deactivated state.
(5) RRC signaling for configuring at least one serving cell related to the target reference signal resource as an activated state or a deactivated state.
(6) RRC signaling for configuring at least one first TCI state corresponding to the target reference signal resource as an activated state or a deactivated state.
(7) RRC signaling for configuring at least one serving cell related to at least one first TCI state as an activated state or a deactivated state.
(8) RRC signaling for configuring a BWP corresponding to the target reference signal resource as an activated state or a deactivated state.

Optionally, in an embodiment, the first indication information is used by the terminal to determine to activate or deactivate at least one target TCI state. The first indication information is carried in RRC signaling, and the RRC signaling may be at least one of the following:
(1) RRC signaling for sending configuration information corresponding to the target TCI state.
(2) RRC signaling for sending activation or deactivation indication information corresponding to the target TCI state.
(3) RRC signaling for configuring at least one target reference signal resource corresponding to the target TCI state as an activated state or a deactivated state.
(4) RRC signaling for configuring at least one target serving cell corresponding to the target TCI state as an activated state or a deactivated state.
(5) RRC signaling for configuring at least one serving cell related to at least one target TCI state as an activated state or a deactivated state.
(6) RRC signaling for configuring a BWP corresponding to the target TCI state as an activated state or a deactivated state.

Optionally, in an embodiment, the first indication information is carried in first MAC CE signaling, and the first MAC CE signaling may be at least one of the following:
(1) MAC CE signaling of activating or deactivating at least one target serving cell.
(2) MAC CE signaling of activating or deactivating at least one serving cell related to at least one target reference signal resource.
(3) MAC CE signaling of activating or deactivating at least one serving cell related to at least one target TCI state.
(4) MAC CE signaling of activating or deactivating at least one first TCI state.
(5) MAC CE signaling of activating or deactivating at least one serving cell related to at least one first TCI state.

Optionally, in an embodiment, the first indication information is carried in second MAC CE signaling, and the second MAC CE signaling may include at least one of the following fields:
(1) A first length field, where the first length field is used to indicate a length of the second MAC CE signaling.
(2) A target reference signal resource indication field, where the target reference signal resource indication field is used to indicate first related information of at least one target reference signal resource.
(3) A target TCI state indication field, where the target TCI state indication field is used to indicate second related information of at least one target TCI state.
(4) At least one target serving cell identifier ID field, where the target serving cell ID field is used to indicate an ID of the target serving cell.
(5) A target serving cell bitmap field, where a bit in the target serving cell bitmap field of a preset length is used to indicate third related information of the target serving cell corresponding to the bit.
(6) At least one BWP ID field, where the BWP ID field is used to indicate an uplink and/or downlink BWP corresponding to the target reference signal resource and/or the target TCI state.
(7) A first TCI state ID field, where the first TCI state ID field is used to indicate an ID of at least one first TCI state.
(8) A first TCI state bitmap field, where bits of a preset length in the first TCI state bitmap field are used to indicate fourth related information of the first TCI state corresponding to the bits.

The apparatus 1500 according to this embodiment of this application may correspond to the procedures of the method 1300 in the embodiments of this application, and the units/modules in the apparatus 1500 and the foregoing operations and/or functions are respectively for implementing the corresponding procedures of the method 1300 and can achieve a same or equivalent technical effect. For brevity, details are not described herein again.

Optionally, as shown in FIG. 16, an embodiment of this application further provides a communications device 1600, including a processor 1601, a memory 1602, a program or an instruction that is stored in the memory 1602 and executable on the processor 1601. For example, when the communications device 1600 is a terminal, the program or the instruction is executed by the processor 1601 to implement the processes in the embodiment of the method for transmitting a reference signal, and a same technical effect can be achieved. When the communications device 1600 is a network side device, the program or the instruction is executed by the processor 1601 to implement the processes in the embodiment of the method for transmitting a reference signal, and a same technical effect can be achieved. To avoid repetition, details are not described herein again.

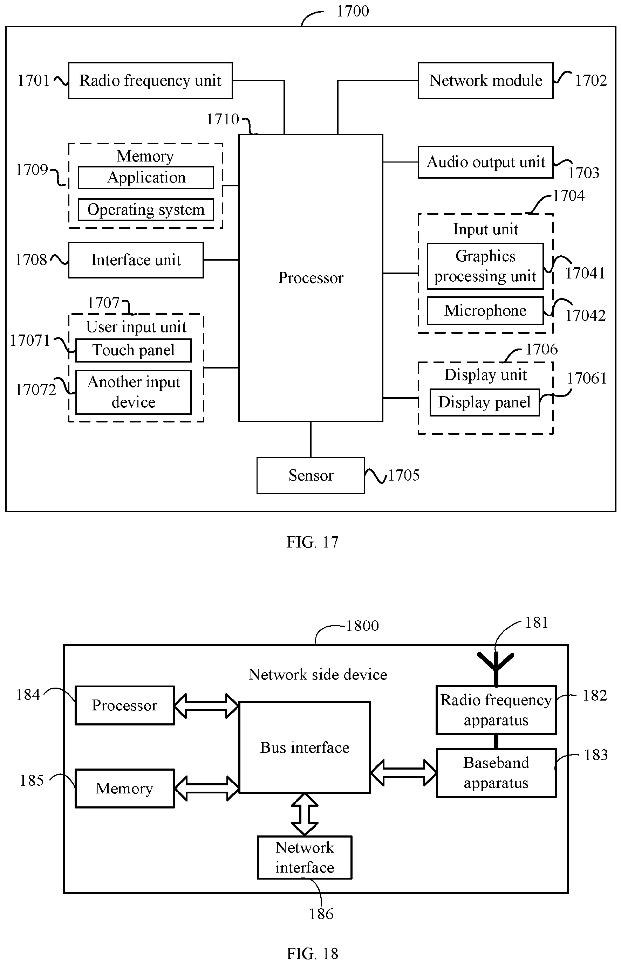

An embodiment of this application further provides a terminal, including a processor and a communications interface. The processor is configured to determine at least one of the following according to first indication information: activating or deactivating at least one target reference signal resource; and activating or deactivating at least one target TCI state, where the target TCI state is related to the target reference signal resource, where the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching. The communications interface is configured to receive the first indication information. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 17 is a schematic diagram of a hardware structure of a terminal according to an embodiment of this application.

A terminal 1700 includes but is not limited to at least some components such as a radio frequency unit 1701, a network module 1702, an audio output unit 1703, an input unit 1704, a sensor 1705, a display unit 1706, a user input unit 1707, an interface unit 1708, a memory 1709, and a processor 1710.

A person skilled in the art can understand that the terminal 1700 may further include a power supply (such as a battery) that supplies power to each component. The power supply may be logically connected to the processor 1710 by using a power supply management system, to implement functions such as charging and discharging management, and power consumption management by using the power supply management system. The terminal structure shown in FIG. 17 constitutes no limitation on the terminal, and the terminal may include more or fewer components than those shown in the figure, or combine some components, or have different component arrangements. Details are not described herein.

It should be understood that, in this embodiment of this application, the input unit 1704 may include a graphics processing unit (Graphics Processing Unit, GPU) 17041 and a microphone 17042, and the graphics processing unit 17041 processes image data of a still picture or a video obtained by an image capture apparatus (such as a camera) in a video capture mode or an image capture mode. The display unit 1706 may include a display panel 17061. Optionally, the display panel 17061 may be configured in a form such as a liquid crystal display or an organic light-emitting diode. The user input unit 1707 includes a touch panel 17071 and another input device 17072. The touch panel 17071 is also referred to as a touchscreen. The touch panel 17071 may include two parts: a touch detection apparatus and a touch controller. The another input device 17072 may include but is not limited to a physical keyboard, a functional button (such as a volume control button or a power on/off button), a trackball, a mouse, and a joystick. Details are not described herein.

In this embodiment of this application, the radio frequency unit 1701 receives downlink data from a network side device and then sends the downlink data to the processor 1710 for processing; and sends uplink data to the network side device. Usually, the radio frequency unit 1701 includes but is not limited to an antenna, at least one amplifier, a transceiver, a coupler, a low noise amplifier, a duplexer, and the like.

The memory 1709 may be configured to store a software program or an instruction and various data. The memory 1709 may mainly include a program or instruction storage area and a data storage area. The program or instruction storage area may store an operating system, and an application or an instruction required by at least one function (for example, a sound playing function or an image playing function). In addition, the memory 1709 may include a high-speed random access memory, and may further include a non-transient memory. The non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-transient solid-state storage component.

The processor 1710 may include one or more processing units. Optionally, an application processor and a modem processor may be integrated into the processor 1710. The application processor mainly processes an operating system, a user interface, an application, an instruction, or the like. The modem processor mainly processes wireless communication, for example, a baseband processor. It can be understood that, alternatively, the modem processor may not be integrated into the processor 1710.

The radio frequency unit 1701 may be configured to receive first indication information.

The processor 1710 may be configured to determine at least one of the following according to the first indication information: activating or deactivating at least one target reference signal resource; and activating or deactivating at least one target TCI state, where the target TCI state is related to the target reference signal resource, and the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

In this embodiment of this application, the terminal determines at least one of the following according to the received first indication information: activating or deactivating at least one target reference signal resource; and activating or deactivating at least one target TCI state related to the target reference signal resource, where the target reference signal resource may be used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching. This embodiment of this application helps implement transmission/cancellation of transmission of the target reference signal resource, accelerate activation of the target serving cell, and improve the transmission efficiency or stability of the target serving cell.

The terminal 1700 provided in this embodiment of this application can implement the processes in the embodiment of the method for transmitting a reference signal, and a same technical effect can be achieved. To avoid repetition, details are not described herein again.

An embodiment of this application further provides a network side device, including a processor and a communications interface. The communications interface is configured to send first indication information, where the first indication information is used by a terminal to determine at least one of the following: activating or deactivating at least one target reference signal resource; and activating or deactivating at least one target TCI state, where the target TCI state is related to the target reference signal resource, and the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching. This network side device embodiment corresponds to the foregoing method embodiment on the network side device. Each implementation process and implementation of the foregoing method embodiment may be applicable to this network side device embodiment, and a same technical effect can be achieved.

Specifically, an embodiment of this application further provides a network side device. As shown in FIG. 18, a network side device 1800 includes an antenna 181, a radio frequency apparatus 182, and a baseband apparatus 183. The antenna 181 is connected to the radio frequency apparatus 182. In an uplink direction, the radio frequency apparatus 182 receives information by using the antenna 181, and sends the received information to the baseband apparatus 183 for processing. In a downlink direction, the baseband apparatus 183 processes information that needs to be sent, and sends processed information to the radio frequency apparatus 182. The radio frequency apparatus 182 processes the received information, and sends processed information by using the antenna 181.

The frequency band processing apparatus may be located in the baseband apparatus 183. The method performed by the network side device in the foregoing embodiment may be implemented in the baseband apparatus 183. The baseband apparatus 183 includes a processor 184 and a memory 185.

The baseband apparatus 183 may include, for example, at least one baseband board, where multiple chips are disposed on the baseband board. As shown in FIG. 18, one chip is, for example, the processor 184, which is connected to the memory 185, so as to invoke a program in the memory 185 to perform operations of the network side device shown in the foregoing method embodiment.

The baseband apparatus 183 may further include a network interface 186, configured to exchange information with the radio frequency apparatus 182. For example, the interface is a common public radio interface (common public radio interface, CPRI for short).

Specifically, the network side device in this embodiment of this application further includes an instruction or a program that is stored in the memory 185 and executable on the processor 184. The processor 184 invokes the instruction or the program in the memory 185 to perform the method performed by the modules shown in FIG. 15, and a same technical effect is achieved. To avoid repetition, details are not described herein again.

An embodiment of this application further provides a readable storage medium. The readable storage medium stores a program or an instruction, and when the program or the instruction is executed by a processor, the processes in the foregoing embodiment of the method for transmitting a reference signal are implemented, and a same technical effect can be achieved. To avoid repetition, details are not described herein again.

The processor is the processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application also provides a chip, where the chip includes a processor and a communications interface, and the communications interface is coupled to the processor. The processor is configured to run a program or an instruction to implement the processes in the embodiment of the method for transmitting a reference signal, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a ..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical schemes of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network side device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A method for transmitting a reference signal, comprising:
receiving, by a terminal, first indication information; and
determining at least one of the following according to the first indication information:
activating or deactivating at least one target reference signal resource; and
activating or deactivating at least one target transmission configuration indicator TCI state, wherein the target TCI state is related to the target reference signal resource; wherein
the target reference signal resource is used in at least one of the following processes of at least one target serving cell: activation of the target serving cell, activation of at least one first TCI state, obtaining of channel state information CSI, obtaining of uplink channel information, CSI measurement, beam measurement, beam failure detection, radio link monitor RLM measurement, radio resource management RRM measurement, cell search, time-frequency tracking, obtaining of timing, automatic gain control AGC, and rate matching.

2. The method according to claim 1, wherein the target reference signal resource, the target TCI state, the target serving cell, and the first TCI state satisfy at least one of the following mapping relationships:
one target reference signal resource corresponds to at least one target TCI state;
one target reference signal resource corresponds to at least one target serving cell;
one target TCI state corresponds to at least one target reference signal resource;
one target TCI state corresponds to at least one target serving cell;
one target serving cell corresponds to at least one target reference signal resource;
one target serving cell corresponds to at least one target TCI state;
one target reference signal resource corresponds to at least one first TCI state; and
one first TCI state corresponds to at least one target reference signal resource.

3. The method according to claim 1, wherein the terminal determines, according to the first indication information, to activate or deactivate at least one target reference signal resource, wherein the first indication information is carried in radio resource control RRC signaling, and the RRC signaling is at least one of the following:
RRC signaling for sending configuration information corresponding to the target reference signal resource;
RRC signaling for sending activation or deactivation indication information corresponding to the target reference signal resource;
RRC signaling for configuring at least one target serving cell corresponding to the target reference signal resource as an activated state or a deactivated state;
RRC signaling for configuring at least one target TCI state corresponding to the target reference signal resource as an activated state or a deactivated state;
RRC signaling for configuring at least one serving cell related to the target reference signal resource as an activated state or a deactivated state;
RRC signaling for configuring at least one first TCI state corresponding to the target reference signal resource as an activated state or a deactivated state;
RRC signaling for configuring at least one serving cell related to at least one first TCI state as an activated state or a deactivated state; and
RRC signaling for configuring a bandwidth part BWP corresponding to the target reference signal resource as an activated state or a deactivated state.

4. The method according to claim 1, wherein the terminal determines, according to the first indication information, to activate or deactivate at least one target TCI state, wherein the first indication information is carried in RRC signaling, and the RRC signaling is at least one of the following:
RRC signaling for sending configuration information corresponding to the target TCI state;
RRC signaling for sending activation or deactivation indication information corresponding to the target TCI state;
RRC signaling for configuring at least one target reference signal resource corresponding to the target TCI state as an activated state or a deactivated state;
RRC signaling for configuring at least one target serving cell corresponding to the target TCI state as an activated state or a deactivated state;
RRC signaling for configuring at least one serving cell related to at least one target TCI state as an activated state or a deactivated state; and
RRC signaling for configuring a BWP corresponding to the target TCI state as an activated state or a deactivated state.

5. The method according to claim 1, wherein the first indication information is carried in first media access control MAC control element CE signaling, and the first MAC CE signaling is at least one of the following:
MAC CE signaling for activating or deactivating at least one target serving cell;
MAC CE signaling for activating or deactivating at least one serving cell related to at least one target reference signal resource;
MAC CE signaling for activating or deactivating at least one serving cell related to at least one target TCI state;
MAC CE signaling for activating or deactivating at least one first TCI state; and
MAC CE signaling for activating or deactivating at least one serving cell related to at least one first TCI state.

6. The method according to claim 1, wherein the first indication information is carried in second MAC CE signaling, and the second MAC CE signaling comprises at least one of the following fields:
a first length field, wherein the first length field is used to indicate a length of the second MAC CE signaling;
a target reference signal resource indication field, wherein the target reference signal resource indication field is used to indicate first related information of at least one target reference signal resource;
a target TCI state indication field, wherein the target TCI state indication field is used to indicate second related information of at least one target TCI state;
at least one target serving cell identifier ID field, wherein the target serving cell ID field is used to indicate an ID of the target serving cell;
a target serving cell bitmap field, wherein a bit in the target serving cell bitmap field of a preset length is used to indicate third related information of the target serving cell corresponding to the bit;
at least one BWP ID field, wherein the BWP ID field is used to indicate an uplink and/or downlink BWP corresponding to the target reference signal resource and/or the target TCI state;
a first TCI state ID field, wherein the first TCI state ID field is used to indicate an ID of at least one first TCI state; and
a first TCI state bitmap field, wherein bits of a preset length in the first TCI state bitmap field are used to indicate fourth related information of the first TCI state corresponding to the bits.

7. The method according to claim 6, wherein the method further comprises:
determining, by the terminal, at least one of the following according to the first indication information:
activating or deactivating at least one target serving cell;
activating or deactivating at least one first TCI state; and
activating the BWP indicated by the BWP ID field.

8. The method according to claim 6, wherein the target reference signal resource indication field comprises at least one of the following fields:
a second length field, wherein the second length field is used to indicate a length of the target reference signal resource indication field;
a target reference signal resource purpose field, wherein the target reference signal resource purpose field is used to indicate the purpose or usage of the activated or deactivated target reference signal resource;
at least one first activation state field, wherein the first activation state field is used to instruct to activate or deactivate at least one target reference signal resource;
at least one target reference signal resource ID field, wherein the target reference signal resource ID field is used to indicate an ID of the activated or deactivated target reference signal resource, or is used to indicate an ID of the target reference signal resource corresponding to the activated or deactivated target TCI state;
a target reference signal resource bitmap field, wherein bits of a preset length in the target reference signal resource bitmap field are used to indicate fifth related information of at least one target reference signal resource;
a repetition field, wherein the repetition field is used to indicate whether a quantity of transmission times of the activated target reference signal resource is greater than 1;
a repetition quantity field, wherein the repetition quantity field is used to indicate a quantity of transmission times of the activated target reference signal resource;
a target reference signal resource time domain offset field, wherein the target reference signal resource time domain offset field is used to indicate a time domain offset related to the activated first reference signal; and
a target reference signal resource quantity field, wherein the target reference signal resource quantity field is used to indicate a quantity of activated or deactivated target reference signal resources.

9. The method according to claim 6, wherein the target TCI state indication field comprises at least one of the following fields:
a third length field, wherein the third length field is used to indicate a length of the target TCI state indication field;
a second activation state field, wherein the second activation state field is used to instruct to activate or deactivate at least one target TCI state;
a target TCI state ID field, wherein the target TCI state ID field is used to indicate an ID of the activated or deactivated target TCI state;
a target TCI state bitmap field, wherein bits of a preset length in the target TCI state bitmap field are used to indicate a target status of the target TCI state corresponding to the bits, and the target status comprises an activated state or a deactivated state;
a second TCI state ID_{i.j} field, wherein the second TCI state ID_{i.j} field is used to indicate an ID of a j-th target TCI state of an i-th code point in an activated or deactivated downlink control information DCI transmission configuration indicator field;
a first resource ID field, wherein the first resource ID field is used to indicate a resource ID of a first resource, and the first resource is used to provide a quasi-co-located QCL source of the target reference signal resource;
a first resource serving cell field, wherein the first resource serving cell field is used to indicate a serving cell in which the first resource is located;
a first resource BWP ID field, wherein the first resource BWP ID field is used to indicate a BWP corresponding to the first resource or a serving cell in which the first resource is located; and
an aperiodic trigger state bitmap field, wherein bits of a preset length of the aperiodic trigger state bitmap field are used to indicate a selection status of an aperiodic trigger state corresponding to the bits.

10. The method according to claim 6, wherein the third related information comprises at least one of the following:
a target status of the target serving cell, wherein the target status comprises an activated state or a deactivated state;
whether the target reference signal resource indication field corresponding to the target serving cell appears;
whether the target TCI state indication field corresponding to the target serving cell appears; and
whether the BWP ID field corresponding to the target serving cell appears.

11. The method according to claim 6, wherein the fourth related information comprises at least one of the following:
a target status of the first TCI state, wherein the target status comprises an activated state or a deactivated state;
whether the target reference signal resource indication field corresponding to the first TCI state appears; and
whether the target TCI state indication field corresponding to the first TCI state appears.

12. The method according to claim 8, wherein the fifth related information comprises at least one of the following:
a target status of the target reference signal, wherein the target status comprises an activated state or a deactivated state;
whether the target TCI state indication field corresponding to the target reference signal appears; and
whether the first TCI state ID field or the first TCI state bitmap field corresponding to the target reference signal appears.

13. The method according to any one of claims 1 to 12, wherein the first indication information is further used to activate a channel state information reference signal CSI-RS resource, and the first indication information further comprises at least one of the following:
CSI-RS activation or deactivation information, wherein the CSI-RS activation or deactivation information is used to instruct to activate or deactivate a preconfigured CSI-RS resource set;
CSI-RS ID information, wherein the CSI-RS ID information is used to indicate an ID of an activated or deactivated CSI-RS resource set; and
TCI state information of the CSI-RS, wherein the TCI state information of the CSI-RS is used to indicate a QCL source of an activated or deactivated CSI-RS resource set.

14. The method according to claim 1, wherein before the receiving, by a terminal, first indication information, the method further comprises: receiving, by the terminal, first configuration information, wherein the first configuration information comprises at least one of the following:
configuration information of the target reference signal resource; and
configuration information of the target TCI state.

15. The method according to claim 14, wherein the target reference signal resource comprises at least one of the following:
one or more target reference signals;
one or more target reference signal sets; and
a list of one or more target reference signal sets.

16. The method according to claim 14, wherein the first configuration information comprises at least one of the following:
an absolute time domain location or interval in which the target reference signal resource appears;
information about a quantity of target reference signal resources;
first time domain offset information, wherein the first time domain offset information is used to indicate a time domain offset between a first time domain location and a time domain location at which the target reference signal resource is sent;
second time domain offset information, wherein the second time domain offset information is used to indicate a time domain offset in a time unit for transmitting the target reference signal resource;
a quantity of transmission times and time domain period information of the target reference signal resource;
activation or deactivation indication information of the target reference signal resource;
an ID of the target reference signal resource that needs to be activated or deactivated;
usage or purpose information of the target reference signal resource;
a time domain offset between target reference signal resources used for different measurement purposes;
activation or deactivation indication information of the target TCI state; and
an ID of the target TCI state that needs to be activated or deactivated.

17. A method for transmitting a reference signal, comprising:
sending, by a network side device, first indication information, wherein the first indication information is used by a terminal to determine at least one of the following:
activating or deactivating at least one target reference signal resource; and
activating or deactivating at least one target TCI state, wherein the target TCI state is related to the target reference signal resource; wherein
the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

18. The method according to claim 17, wherein the target reference signal resource, the target TCI state, the target serving cell, and the first TCI state satisfy at least one of the following mapping relationships:
one target reference signal resource corresponds to at least one target TCI state;
one target reference signal resource corresponds to at least one target serving cell;
one target TCI state corresponds to at least one target reference signal resource;
one target TCI state corresponds to at least one target serving cell;
one target serving cell corresponds to at least one target reference signal resource;
one target serving cell corresponds to at least one target TCI state;
one target reference signal resource corresponds to at least one first TCI state; and
one first TCI state corresponds to at least one target reference signal resource.

19. The method according to claim 17, wherein the first indication information is used by the terminal to determine to activate or deactivate at least one target reference signal resource, the first indication information is carried in RRC signaling, and the RRC signaling is at least one of the following:
RRC signaling for sending configuration information corresponding to the target reference signal resource;
RRC signaling for sending activation or deactivation indication information corresponding to the target reference signal resource;
RRC signaling for configuring at least one target serving cell corresponding to the target reference signal resource as an activated state or a deactivated state;
RRC signaling for configuring at least one target TCI state corresponding to the target reference signal resource as an activated state or a deactivated state;
RRC signaling for configuring at least one serving cell related to the target reference signal resource as an activated state or a deactivated state;
RRC signaling for configuring at least one first TCI state corresponding to the target reference signal resource as an activated state or a deactivated state;
RRC signaling for configuring at least one serving cell related to at least one first TCI state as an activated state or a deactivated state; and
RRC signaling for configuring a bandwidth part BWP corresponding to the target reference signal resource as an activated state or a deactivated state.

20. The method according to claim 17, wherein the first indication information is used by the terminal to determine to activate or deactivate at least one target TCI resource, the first indication information is carried in RRC signaling, and the RRC signaling is at least one of the following:
RRC signaling for sending configuration information corresponding to the target TCI state;
RRC signaling for sending activation or deactivation indication information corresponding to the target TCI state;
RRC signaling for configuring at least one target reference signal resource corresponding to the target TCI state as an activated state or a deactivated state;
RRC signaling for configuring at least one target serving cell corresponding to the target TCI state as an activated state or a deactivated state;
RRC signaling for configuring at least one serving cell related to at least one target TCI state as an activated state or a deactivated state; and
RRC signaling for configuring a BWP corresponding to the target TCI state as an activated state or a deactivated state.

21. The method according to claim 17, wherein the first indication information is carried in first MAC CE signaling, and the first MAC CE signaling is at least one of the following fields:
MAC CE signaling of activating or deactivating at least one target serving cell;
MAC CE signaling of activating or deactivating at least one serving cell related to at least one target reference signal resource;
MAC CE signaling of activating or deactivating at least one serving cell related to at least one target TCI state;
MAC CE signaling of activating or deactivating at least one first TCI state; and
MAC CE signaling of activating or deactivating at least one serving cell related to at least one first TCI state.

22. The method according to claim 17, wherein the first indication information is carried in second MAC CE signaling, and the second MAC CE signaling comprises at least one of the following fields:
a first length field, wherein the first length field is used to indicate a length of the second MAC CE signaling;
a target reference signal resource indication field, wherein the target reference signal resource indication field is used to indicate first related information of at least one target reference signal resource;
a target TCI state indication field, wherein the target TCI state indication field is used to indicate second related information of at least one target TCI state;
at least one target serving cell identifier ID field, wherein the target serving cell ID field is used to indicate an ID of the target serving cell;
a target serving cell bitmap field, wherein a bit in the target serving cell bitmap field of a preset length is used to indicate third related information of the target serving cell corresponding to the bit;
at least one BWP ID field, wherein the BWP ID field is used to indicate an uplink and/or downlink BWP corresponding to the target reference signal resource and/or the target TCI state;
a first TCI state ID field, wherein the first TCI state ID field is used to indicate an ID of at least one first TCI state; and
a first TCI state bitmap field, wherein bits of a preset length in the first TCI state bitmap field are used to indicate fourth related information of the first TCI state corresponding to the bits.

23. The method according to claim 22, wherein the first indication information is further used by the terminal to determine at least one of the following:
activating or deactivating at least one target serving cell;
activating or deactivating at least one first TCI state; and
activating the BWP indicated by the BWP ID field.

24. The method according to claim 22, wherein the target reference signal resource indication field comprises at least one of the following fields:
a second length field, wherein the second length field is used to indicate a length of the target reference signal resource indication field;
a target reference signal resource purpose field, wherein the target reference signal resource purpose field is used to indicate the purpose or usage of the activated or deactivated target reference signal resource;
at least one first activation state field, wherein the first activation state field is used to instruct to activate or deactivate at least one target reference signal resource;
at least one target reference signal resource ID field, wherein the target reference signal resource ID field is used to indicate an ID of the activated or deactivated target reference signal resource, or is used to indicate an ID of the target reference signal resource corresponding to the activated or deactivated target TCI state;
a target reference signal resource bitmap field, wherein bits of a preset length in the target reference signal resource bitmap field are used to indicate fifth related information of at least one target reference signal resource;
a repetition field, wherein the repetition field is used to indicate whether a quantity of transmission times of the activated target reference signal resource is greater than 1;
a repetition quantity field, wherein the repetition quantity field is used to indicate a quantity of transmission times of the activated target reference signal resource;
a target reference signal resource time domain offset field, wherein the target reference signal resource time domain offset field is used to indicate a time domain offset related to the activated first reference signal; and
a target reference signal resource quantity field, wherein the target reference signal resource quantity field is used to indicate a quantity of activated or deactivated target reference signal resources.

25. The method according to claim 22, wherein the target TCI state indication field comprises at least one of the following fields:
a third length field, wherein the third length field is used to indicate a length of the target TCI state indication field;
a second activation state field, wherein the second activation state field is used to instruct to activate or deactivate at least one target TCI state;
a target TCI state ID field, wherein the target TCI state ID field is used to indicate an ID of the activated or deactivated target TCI state;
a target TCI state bitmap field, wherein bits of a preset length in the target TCI state bitmap field are used to indicate a target status of the target TCI state corresponding to the bits, and the target status comprises an activated state or a deactivated state;
a second TCI state ID_{i.j} field, wherein the second TCI state ID_{i.j} field is used to indicate an ID of a j-th target TCI state of an i-th code point in an activated or deactivated downlink control information DCI transmission configuration indicator field;
a first resource ID field, wherein the first resource ID field is used to indicate a resource ID of a first resource, and the first resource is used to provide a quasi-co-located QCL source of the target reference signal resource;
a first resource serving cell field, wherein the first resource serving cell field is used to indicate a serving cell in which the first resource is located;
a first resource BWP ID field, wherein the first resource BWP ID field is used to indicate a BWP corresponding to the first resource or a serving cell in which the first resource is located; and
an aperiodic trigger state bitmap field, wherein bits of a preset length of the aperiodic trigger state bitmap field are used to indicate a selection status of an aperiodic trigger state corresponding to the bits.

26. The method according to claim 22, wherein the third related information comprises at least one of the following:
a target status of the target serving cell, wherein the target status comprises an activated state or a deactivated state;
whether the target reference signal resource indication field corresponding to the target serving cell appears;
whether the target TCI state indication field corresponding to the target serving cell appears; and
whether the BWP ID field corresponding to the target serving cell appears.

27. The method according to claim 22, wherein the fourth related information comprises at least one of the following:
a target status of the first TCI state, wherein the target status comprises an activated state or a deactivated state;
whether the target reference signal resource indication field corresponding to the first TCI state appears; and
whether the target TCI state indication field corresponding to the first TCI state appears.

28. The method according to claim 24, wherein the fifth related information comprises at least one of the following:
a target status of the target reference signal, wherein the target status comprises an activated state or a deactivated state;
whether the target TCI state indication field corresponding to the target reference signal appears; and
whether the first TCI state ID field or the first TCI state bitmap field corresponding to the target reference signal appears.

29. The method according to any one of claims 17 to 28, wherein the first indication information is further used to activate a CSI-RS resource, and the first indication information further comprises at least one of the following:
CSI-RS activation or deactivation information, wherein the CSI-RS activation or deactivation information is used to instruct to activate or deactivate a preconfigured CSI-RS resource set;
CSI-RS ID information, wherein the CSI-RS ID information is used to indicate an ID of an activated or deactivated CSI-RS resource set; and
TCI state information of the CSI-RS, wherein the TCI state information of the CSI-RS is used to indicate a QCL source of an activated or deactivated CSI-RS resource set.

30. The method according to claim 17, wherein before the sending, by a network side device, first indication information, the method further comprises: sending, by the network side device, first configuration information, wherein the first configuration information comprises at least one of the following:
configuration information of the target reference signal resource; and
configuration information of the target TCI state.

31. The method according to claim 30, wherein the target reference signal resource comprises at least one of the following:
one or more target reference signals;
one or more target reference signal sets; and
a list of one or more target reference signal sets.

32. The method according to claim 30, wherein the first configuration information comprises at least one of the following:
an absolute time domain location or interval in which the target reference signal resource appears;
information about a quantity of target reference signal resources;
first time domain offset information, wherein the first time domain offset information is used to indicate a time domain offset between a first time domain location and a time domain location at which the target reference signal resource is sent;
second time domain offset information, wherein the second time domain offset information is used to indicate a time domain offset in a time unit for transmitting the target reference signal resource;
a quantity of transmission times and time domain period information of the target reference signal resource;
activation or deactivation indication information of the target reference signal resource;
an ID of the target reference signal resource that needs to be activated or deactivated;
usage or purpose information of the target reference signal resource;
a time domain offset between target reference signal resources used for different measurement purposes;
activation or deactivation indication information of the target TCI state; and
an ID of the target TCI state that needs to be activated or deactivated.

33. An apparatus for transmitting a reference signal, comprising:
a receiving module, configured to receive first indication information; and
a determining module, configured to determine at least one of the following according to the first indication information:
activating or deactivating at least one target reference signal resource; and
activating or deactivating at least one target TCI state, wherein the target TCI state is related to the target reference signal resource; wherein
the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

34. The apparatus according to claim 33, wherein the target reference signal resource, the target TCI state, the target serving cell, and the first TCI state satisfy at least one of the following mapping relationships:
one target reference signal resource corresponds to at least one target TCI state;
one target reference signal resource corresponds to at least one target serving cell;
one target TCI state corresponds to at least one target reference signal resource;
one target TCI state corresponds to at least one target serving cell;
one target serving cell corresponds to at least one target reference signal resource;
one target serving cell corresponds to at least one target TCI state;
one target reference signal resource corresponds to at least one first TCI state; and
one first TCI state corresponds to at least one target reference signal resource.

35. The apparatus according to claim 33, wherein the determining module determines, according to the first indication information, to activate or deactivate at least one target reference signal resource, wherein the first indication information is carried in RRC signaling, and the RRC signaling is at least one of the following:
RRC signaling for sending configuration information corresponding to the target reference signal resource;
RRC signaling for sending activation or deactivation indication information corresponding to the target reference signal resource;
RRC signaling for configuring at least one target serving cell corresponding to the target reference signal resource as an activated state or a deactivated state;
RRC signaling for configuring at least one target TCI state corresponding to the target reference signal resource as an activated state or a deactivated state;
RRC signaling for configuring at least one serving cell related to the target reference signal resource as an activated state or a deactivated state;
RRC signaling for configuring at least one first TCI state corresponding to the target reference signal resource as an activated state or a deactivated state;
RRC signaling for configuring at least one serving cell related to at least one first TCI state as an activated state or a deactivated state; and
RRC signaling for configuring a bandwidth part BWP corresponding to the target reference signal resource as an activated state or a deactivated state.

36. The apparatus according to claim 33, wherein the determining module determines, according to the first indication information, to activate or deactivate at least one target TCI state, wherein the first indication information is carried in RRC signaling, and the RRC signaling is at least one of the following:
RRC signaling for sending configuration information corresponding to the target TCI state;
RRC signaling for sending activation or deactivation indication information corresponding to the target TCI state;
RRC signaling for configuring at least one target reference signal resource corresponding to the target TCI state as an activated state or a deactivated state;
RRC signaling for configuring at least one target serving cell corresponding to the target TCI state as an activated state or a deactivated state;
RRC signaling for configuring at least one serving cell related to at least one target TCI state as an activated state or a deactivated state; and
RRC signaling for configuring a BWP corresponding to the target TCI state as an activated state or a deactivated state.

37. The apparatus according to claim 33, wherein the first indication information is carried in first MAC CE signaling, and the first MAC CE signaling is at least one of the following fields:
MAC CE signaling of activating or deactivating at least one target serving cell;
MAC CE signaling of activating or deactivating at least one serving cell related to at least one target reference signal resource;
MAC CE signaling of activating or deactivating at least one serving cell related to at least one target TCI state;
MAC CE signaling of activating or deactivating at least one first TCI state; and
MAC CE signaling of activating or deactivating at least one serving cell related to at least one first TCI state.

38. The apparatus according to claim 33, wherein the first indication information is carried in second MAC CE signaling, and the second MAC CE signaling comprises at least one of the following fields:
a first length field, wherein the first length field is used to indicate a length of the second MAC CE signaling;
a target reference signal resource indication field, wherein the target reference signal resource indication field is used to indicate first related information of at least one target reference signal resource;
a target TCI state indication field, wherein the target TCI state indication field is used to indicate second related information of at least one target TCI state;
at least one target serving cell identifier ID field, wherein the target serving cell ID field is used to indicate an ID of the target serving cell;
a target serving cell bitmap field, wherein a bit in the target serving cell bitmap field of a preset length is used to indicate third related information of the target serving cell corresponding to the bit;
at least one BWP ID field, wherein the BWP ID field is used to indicate an uplink and/or downlink BWP corresponding to the target reference signal resource and/or the target TCI state;
a first TCI state ID field, wherein the first TCI state ID field is used to indicate an ID of at least one first TCI state; and
a first TCI state bitmap field, wherein bits of a preset length in the first TCI state bitmap field are used to indicate fourth related information of the first TCI state corresponding to the bits.

39. An apparatus for transmitting a reference signal, comprising:
a sending module, configured to send first indication information, wherein the first indication information is used by a terminal to determine at least one of the following:
activating or deactivating at least one target reference signal resource; and
activating or deactivating at least one target TCI state, wherein the target TCI state is related to the target reference signal resource; wherein
the target reference signal resource is used in at least one of the following processes of at least one target serving cell: activation of the target serving cell, activation of at least one first TCI state, CSI obtaining, obtaining of uplink channel information, CSI measurement, beam measurement, beam failure detection, RLM measurement, RRM measurement, cell search, time-frequency tracking, obtaining of timing, AGC, and rate matching.

40. The apparatus according to claim 39, wherein the target reference signal resource, the target TCI state, the target serving cell, and the first TCI state satisfy at least one of the following mapping relationships:
one target reference signal resource corresponds to at least one target TCI state;
one target reference signal resource corresponds to at least one target serving cell;
one target TCI state corresponds to at least one target reference signal resource;
one target TCI state corresponds to at least one target serving cell;
one target serving cell corresponds to at least one target reference signal resource;
one target serving cell corresponds to at least one target TCI state;
one target reference signal resource corresponds to at least one first TCI state; and
one first TCI state corresponds to at least one target reference signal resource.

41. The apparatus according to claim 39, wherein the first indication information is used by a terminal to determine to activate or deactivate at least one target reference signal resource, the first indication information is carried in RRC signaling, and the RRC signaling is at least one of the following:
RRC signaling for sending configuration information corresponding to the target reference signal resource;
RRC signaling for sending activation or deactivation indication information corresponding to the target reference signal resource;
RRC signaling for configuring at least one target serving cell corresponding to the target reference signal resource as an activated state or a deactivated state;
RRC signaling for configuring at least one target TCI state corresponding to the target reference signal resource as an activated state or a deactivated state;
RRC signaling for configuring at least one serving cell related to the target reference signal resource as an activated state or a deactivated state;
RRC signaling for configuring at least one first TCI state corresponding to the target reference signal resource as an activated state or a deactivated state;
RRC signaling for configuring at least one serving cell related to at least one first TCI state as an activated state or a deactivated state; and
RRC signaling for configuring a bandwidth part BWP corresponding to the target reference signal resource as an activated state or a deactivated state.

42. The apparatus according to claim 39, wherein the first indication information is used by a terminal to determine to activate or deactivate at least one target TCI resource, the first indication information is carried in RRC signaling, and the RRC signaling is at least one of the following:
RRC signaling for sending configuration information corresponding to the target TCI state;
RRC signaling for sending activation or deactivation indication information corresponding to the target TCI state;
RRC signaling for configuring at least one target reference signal resource corresponding to the target TCI state as an activated state or a deactivated state;
RRC signaling for configuring at least one target serving cell corresponding to the target TCI state as an activated state or a deactivated state;
RRC signaling for configuring at least one serving cell related to at least one target TCI state as an activated state or a deactivated state; and
RRC signaling for configuring a BWP corresponding to the target TCI state as an activated state or a deactivated state.

43. The apparatus according to claim 39, wherein the first indication information is carried in first MAC CE signaling, and the first MAC CE signaling is at least one of the following fields:
MAC CE signaling of activating or deactivating at least one target serving cell;
MAC CE signaling of activating or deactivating at least one serving cell related to at least one target reference signal resource;
MAC CE signaling of activating or deactivating at least one serving cell related to at least one target TCI state;
MAC CE signaling of activating or deactivating at least one first TCI state; and
MAC CE signaling of activating or deactivating at least one serving cell related to at least one first TCI state.

44. The apparatus according to claim 39, wherein the first indication information is carried in second MAC CE signaling, and the second MAC CE signaling comprises at least one of the following fields:
a first length field, wherein the first length field is used to indicate a length of the second MAC CE signaling;
a target reference signal resource indication field, wherein the target reference signal resource indication field is used to indicate first related information of at least one target reference signal resource;
a target TCI state indication field, wherein the target TCI state indication field is used to indicate second related information of at least one target TCI state;
at least one target serving cell identifier ID field, wherein the target serving cell ID field is used to indicate an ID of the target serving cell;
a target serving cell bitmap field, wherein a bit in the target serving cell bitmap field of a preset length is used to indicate third related information of the target serving cell corresponding to the bit;
at least one BWP ID field, wherein the BWP ID field is used to indicate an uplink and/or downlink BWP corresponding to the target reference signal resource and/or the target TCI state;
a first TCI state ID field, wherein the first TCI state ID field is used to indicate an ID of at least one first TCI state; and
a first TCI state bitmap field, wherein bits of a preset length in the first TCI state bitmap field are used to indicate fourth related information of the first TCI state corresponding to the bits.

45. A terminal, comprising a processor, a memory, and a program or an instruction that is stored in the memory and executable on the processor, wherein when the program or the instruction is executed by the processor, the method for transmitting a reference signal according to any one of claims 1 to 16 is implemented.

46. A network side device, comprising a processor, a memory, and a program or an instruction that is stored in the memory and executable on the processor, wherein when the program or the instruction is executed by the processor, the method for transmitting a reference signal according to any one of claims 17 to 32 is implemented.

47. A readable storage medium, wherein the readable storage medium stores a program or an instruction, and when the program or the instruction is executed by a processor, the method for transmitting a reference signal according to any one of claims 1 to 16 is implemented, or the method for transmitting a reference signal according to any one of claims 17 to 32 is implemented.
